Europäisches Patentamt

(19) European Patent Office

Office européen des brevets

(11) **EP 0 946 058 A1**

## (12) EUROPEAN PATENT APPLICATION
published in accordance with Art. 158(3) EPC

(43) Date of publication:
29.09.1999 Bulletin 1999/39

(21) Application number: 96945778.7

(22) Date of filing: 13.11.1996

(51) Int. Cl.6: **H04N 7/01**

(86) International application number:
**PCT/UA96/00016**

(87) International publication number:
**WO 98/11722 (19.03.1998 Gazette 1998/11)**

(84) Designated Contracting States:
**AT BE CH DE DK ES FI FR GB GR IE IT LI LU MC NL PT SE**

(30) Priority: **10.09.1996 UA 96093517**

(71) Applicant:
**Miroshnichenko, Sergei Ivanovich
Kiev, 252054 (UA)**

(72) Inventors:
  • **MIROSHNICHENKO, Sergei Ivanovich
Kiev, 252054 (UA)**

  • **ZHILKO, Evgeny Olegovich
Kiev, 254209 (UA)**
  • **KULAKOV, Vladimir Vladimirovich
Kiev, 254208 (UA)**
  • **NEVGASIMY, Andrei Alexandrovich
Kiev, 253192 (UA)**

(74) Representative:
**Brophy, David et al
F.R. Kelly & Co.
27 Clyde Road
Ballsbridge
Dublin 4 (IE)**

### (54) HIGH-DEFINITION TELEVISION SYSTEM

(57)    The present invention relates to a high-definition television system that comprises the following elements: at least two television cameras; a unit comprising several analog-digital converters; a video-signal-standard converter; a RAM-type memory; means for synthesizing a output video signal which are connected to each other and to the outputs of the television cameras; and a central processor such as a (personal) computer. The means for synthesizing a output video signal comprise a multiple-channel geometric distortion corrector as well as a synchronizing unit. The above-mentioned means are used in a dynamic process for efficiently assembling image fragments into a full "seam-less" image, wherein said image has a definition of at least 3000 x 4000 elements with a resolution and a contrast at least equal to those of pictures on large-scale photographic or cinematographic X-ray films. The corrector is connected to the television camera outputs through the analog-digital conversion unit and to the (personal) computer input through the video-signal-standard converter and the RAM. The control input of the synchronising unit is connected to the synchronisation output of at least the last television camera, while the control outputs of said unit are connected to the clock input of the analog-digital conversion unit, to the address inputs of the corrector and to the control and address synchronisation inputs of the video-signal-standard converter.

HIGH RESOLUTION TV SYSTEM

Fig.1

Co-author-declarators:
S.I. Miroshnichenko
E.O. Zhilko
V.V. Kulakov
A.A. Nevgasimij

## Description

<u>The Technology</u>

The invention relates to block diagrams for high-resolution television systems using at least two video cameras and devices for "stitching together" an integral image from the resulting sections. Such systems can be used primarily for the needs of roentgen functional diagnostics, for example:

for angiographic studies using x-ray contrast media, in particular for the determination of the patency of vessels and assessing the effectiveness of the blood supply of organs and tissues;
for the roentgenoscopic monitoring of the course of surgical operations using probes, catheters, etc., instruments inserted into the body through the oesophagus, anus, or blood vessels;
for the roentgenoscopy of the lungs, heart, stomach, and other motile organs;
for filmless roentgenography in traumatology;
for filmless fluorography in mass screening examinations of the public; and
for roentgenography in urology and other fields in which the periodic observation of the slow spread of x-ray contrast media in the organism is required.

<u>Prior Technology</u>

Evaluations of the types indicated are becoming ever more large-scale and, in the aggregate, ever more expensive as medicine develops. Therefore, the rejection of still and cinematic photography using film (especially x-ray-sensitive film) materials, that were customary until quite recently, has for a considerable time presented a serious problem.

It is natural that at the contemporary level of development of television and computer technology the shift to "filmless" roentgen diagnostics has become possible mainly through the creation of x-ray television systems.

However, there are several fundamental difficulties along this path.

The first of these is dictated by the fact that many physiological processes (especially circulatory) unfold at such a speed that x-ray contrast agents introduced into the vascular bed disperse from the zone of observation in a matter of only several seconds. Therefore, the objective need exists for quite high-speed (at a frame rate no less than 25 frames per second) video filming.

Furthermore, the diagnostic value of x-ray television images is dependant to a substantial degree on their resolution. In other words, their spatial resolution (from 3 to 5 line-pairs per mm) and the contrast must not be inferior to that for images on film. Correspondingly, decomposition of the integral image into no fewer than 3000 x 4000 pixels should be acceptable.

And, finally, x-ray television systems must be as simple and, accordingly, technologically feasible to manufacture, affordable, dependable, and convenient to operate.

The fulfilment of each of these requirements through the construction of television systems using special television cameras does not present significant difficulties.

In fact, the KAF-16800 model (Kodak) television camera (abbreviated, video camera), based on MOS (metal oxide semiconductor) structures, and also including MOS transistors in the output stages, with a format of 4096 x 4096 pixels, is noted (News Briefs, Tech Briefs... Medical Imaging, The Business Magazine for Technology Management, Vol. 10, No. 12, 1995, p. 20).

This video camera, according to available data, is unique in its resolution.

However, due to the necessity of aberration correction, it has a highly complex construction (especially the optics), and is therefore expensive to manufacture and operate. In addition, the MOS structures provide a frame rate no greater than 0.5 frames per second; this is acceptable, for example, for filmless roentgenography in traumatology, but substantially lower than the required minimum of 25 frames per second for angiography and even for the monitoring of the course of surgical procedures (about 7 frames per second).

Therefore, attempts continue to increase the resolution and frame rate in x-ray television systems using substantially less expensive and high-reliability traditional video cameras.

Thus, a television system with 2000 line scan and resolution no greater than 1350 pixels per line has been built based on a Philips XQ5OO2 tube (G. Murphy, W. Bitler, J. Lybrook, T. Slevener, M. Broemelsiek). The application of a Plumbicon TV-Camera Tube in 2000-Line System. Proc. SPIE. - 1994, Vol. 2163, p. 333-339).

Due to the limited 20 MHz frequency band of the video signal, this system has a frame rate no greater than 7.5 frames per second. Such a frame rate is sufficient, for example, for roentgenoscopic monitoring of the course of surgical procedures, but is clearly inadequate for angiographic examinations. Standard calculations for specialists in this art have shown that broadening the frequency band of the video signal up to 30 MHz could achieve a resolution up to 2000 pixels per line, but at the same frame rate of 7.5 frames per second. However, this broadening is made difficult by the necessity of creating a specialised video preamplifier using broad-band input stages, and by the necessity of decreasing the intrinsic noise level of the image tube.

An increase in resolution up to 2000 x 2000 pixels in one frame is achieved in the x-ray television system for gastrointestinal examinations through the use of SATICON video cameras which are connected optically to the x-ray source through an optical splitter and an x-ray optoelectronic transducer (N. Ogura, Y. Masuda, H. Fujita. Technical and Clinical Evaluations of a 2048 x 2048 Matrix Digital Radiography System for Gastrointestinal Examinations. Ibid. 1991, Vol. 1443, p. 401-408). This made it possible to obtain a frame rate of just 0.94 frames per second.

To avoid broadening of the frequency band of the video signal by overcoming the above-mentioned difficulties, it is advisable to use such a television system only for the observation of slowly unfolding physiological processes, while fast processes may be filmed on wide (up to 100 mm) movie film for later analysis.

These devices are convenient (even if expensive) for diagnostic examinations in situations in which the life of the patient is not in immediate danger, but are not practically applicable for the roentgenoscopic monitoring of the course of surgical procedures and are ill-suited for large-scale fluorographic screening of the population.

Attempts to use high-resolution video cameras based on large-format charge-coupled semiconductor devices (from here on, abbreviated CCD) described by Z. Ninkov, et al. (Characterization of a Large-Format CCD Array. Optical engineering, 1995, Vol. 34, No. 1) in x-ray television systems with a frame rate no less than 25 frames per second are associated with even higher requirements for the frequency band width of the video signals.

Thus, the frequency band of the video signals for commercially available video cameras based on CCD arrays does not exceed 30 MHz. However, the frequency band width of the video signal must be about 100 MHz even for the decomposition of images into 2000 x 2000 pixels at a frame rate of 25 frames per second. When shifting to a format of 3000 x 4000 pixels, which is close to the resolution of 3O x 40 cm x-ray film, the frequency band width of the video signal must now be about 300 MHz; this exceeds many-fold the capacity of existing video cameras based on CCD arrays.

A natural way to overcome these difficulties may be achieved by creating multicamera television systems, in which each of the high-speed video cameras with a standard frequency band of the video signal, is aimed at part of the object under examination or observation, and the set of images obtained can be used to represent the object as a whole.

Television security and surveillance systems, for example, VC-Profi (V701-003), CSS-4223, and Videoman (JHV-501), in which at least two video cameras are connected to a common monitor and/or a composite image analyser (see the catalogue, "Equipment for Television Observation and Television Monitoring Systems", Ultra Star, South Korea, published by the Centre for Security Technologies in Moscow, 1995, p. 36), may serve as the simplest example of the use of this principle.

Such systems are entirely effective for the discrimination of moving or low-contrast objects in a general field of observation.

However, the composite image formed by them consists of individual parts clearly corresponding to the fields of view of the individual video cameras, with clearly visible boundaries between such parts, and the resolution of such systems is equal in essence to the resolution of the monitor on which the composite image is displayed.

Therefore, these systems cannot be used without substantial improvements as components of systems of observation of integral objects (requiring detailed imaging), and especially as components of x-ray diagnostic systems for the needs of angiography (as well as for monitoring the course of surgical procedures).

Nevertheless, systems of this type can serve as the basis for the creation of high-resolution x-ray television systems.

It may be assumed that with respect to technical essence, a high-resolution television system (in the original - "Multi-source Image Real Time Mixing and Anti-Aliasing") according to USA patent 5.351.067 (Lumelsky L. et al) is the closest such system to the proposed system.

That system has:

at least two input source channels for parts of the required image, in particular, at least two video cameras; connected in series to each of the said channels:

- analog-to-digital converters (from here on, ADCs);
- internal memory (from here on, RAM); and
- input video standards converters;

devices for synthesis of the video output signal connected to the outputs of the video cameras comprising of:

- at least two mixers that are connected to the outputs of these standards converters;
- at least two multiplexers, in which:

-- the control inputs are connected to a common control unit containing a personal computer (PC), buffer memory module, and a video splitter,

-- the mixers are connected to the first data inputs and the standards converters are connected to the second data inputs, and

-- which, starting from the second, are connected in series through the third data inputs to the preceding multiplexers, while

- a high-resolution monitor (display) is connected to the output of the last multiplexer;

a central processor based on a PC.

A substantial (up to 260 MHz) broadening of the common frequency band of the video output signal is achieved in the described television system by means of the multiplexers, and the objective is thereby achieved of the simultaneous displaying on a single screen of several images, whose position can be selected as the operator wishes in various combinations and scales, and which can replace one another at a frequency of 25 frames per second and higher.

However, even when the input video cameras are placed so that the aggregate of their fields of view covers the entire area of any integral object under observation or examination, it is not possible to form an integral image at the output of the system without visible boundaries of the fields of view of the individual video cameras. This undesirable effect arises:

first, because geometric distortions are unavoidable (even if each is individually negligible) in each input stage, which will be all the more noticeable in the output (synthesized) video signal, the closer the lenses of the video cameras are to the object under observation or examination;

secondly, because the equipment used to obtain the initial data (video cameras, ADCs, etc.) cannot be absolutely identical in their operating characteristics.

As a result, the system described cannot be used effectively as a component of systems for observation of integral (requiring detailed imaging) objects, and especially as components of high resolution diagnostic x-ray television systems for the analysis of moving images, in which the distance between the lenses of the video cameras and the object under examination (for example, the circulatory system) or observation (for example, a surgical probe, advancing along a tubular organ) must be as short as possible. The need for the minimisation of this distance is determined:

first, by the need to decrease radiation exposure of human organism (this exposure can be attenuated by maximising the luminous flux at the output of the primary transducer converting X-radiation to visible light);

secondly, by the need to obtain the most detailed images possible of the objects under examination or observation.

The Essence of the invention

In respect of the above, the objective of creating such a high-resolution television system which would effectively provide for the "stitching" of individual images into an integral ("seam free") picture of a dynamic process, characterised by a resolution of no fewer than 3000 x 4000 pixels with spatial resolution and contrast not inferior to images on wide x-ray still or motion picture films, by improving the composition and structure of the system, this aim forms the basis of the invention.

The objective is achieved by the fact that in a high-resolution television system having at least two video cameras, there are a module of analog-to-digital converters (ADCs), a video standards converter, internal memory (RAM), devices for synthesizing the video output signal connected to the outputs of the video cameras and interconnected, and a central processor based on a PC; according to the invention, the video output synthesizers are based on a multichannel geometric distortion corrector and a synchroniser; the corrector is connected both through the ADC module to the outputs of the video cameras and through the video standards converter and RAM to the input of the PC, while the synchroniser is connected through its own control input to the synchronisation output of at least one video camera, and through its control outputs to the clock input of the ADC module, to the address inputs of the corrector also to the address and synchronising control inputs of the video standards converter.

Making the devices for synthesis of the video output signal on the basis of a multichannel geometric distortion corrector and a synchroniser and their inclusion in the structure of the system, in the manner indicated above, ensures the necessary and sufficient preconditions for a substantial reduction of the influence of geometric distortions arising in the input stages of the television system on the quality of the video output (synthesized) signal. In fact, for the effective "stitching" of individual images of parts of an object to be examined or observed into an integral image, it is sufficient in the majority of cases to take into account and eliminate partial overlappings of the fields of view of individual video cameras and the geometric distortions introduced into their video output signals by the optical systems.

The first additional distinction resides in the fact that the television system is equipped with a source of primary (x-ray) radiation and a converter of the x-ray image to a visual image which are mounted in front of the video cameras. In the majority of cases, this addition is sufficient for the use of the proposed television system as a component of x-ray diagnostic systems

The second additional distinction resides in the fact that the television system is equipped with at least one calibration test object in the form of a three-dimensional target which can be placed in front of the video cameras when the system is being adjusted. The adjustment of the proposed television system for the "stitching" of individual images of parts of an object to be examined or observed into an integral image of this object is thus facilitated.

The third additional distinction resides in the fact that the television system is equipped with a means for placing test objects in the field of view and removing these test objects from the field of view of the video cameras, which is connected to the control synchronising output of the synchroniser, while this synchroniser is additionally interconnected with the PC by a feedback-control loop. The automatic adjustment of the television system when the necessity exists for online correction of the quality of the "stitching" of the integral image from the images of the individual video cameras is thus achieved.

The fourth additional distinction resides in the fact that the television system is equipped with a high-resolution monitor which is connected to the data output of the video standards converter and RAM. The possibility is thereby secured of the direct perception by the operator of the "stitched" integral image of the object under observation or examination (at a frequency no less than 25 frames per second).

The fifth additional distinction resides in the fact that the said multichannel geometric distortion corrector has, in each of the channels of the television system:

at the input:

- at least two identical calculation circuits for generating the corrected co-ordinates along the horizontal and the vertical, respectively, of each of the pixels in the video output signal, computed on the basis of the initial co-ordinates of analogous elements of the image in the video input signal and correction factors, and
- at least two identical slave memory modules for the digital video input signal, connected to said calculation circuits as the sources of the addresses for readout of data on the corrected pixels of the video output signal, while

at the output:
an inverter, which is inserted between the above-indicated synchroniser and one of the said slave memory modules, and

- an output multiplexer for the alternate connection of the outputs of the slave memory modules to the input of the above-mentioned video standards converters and RAM.

Such a structure of the multichannel geometric distortion corrector is preferable for x-ray television systems adjusted for "stitching together" integral image from images formed by individual video cameras, using rigid three-dimensional targets.

The sixth additional distinction resides in the fact that in the said multichannel corrector:

each of the calculation circuits has at least:

- one input comparator with fixed threshold digital code, connected to the output of one of the ADCs,
- one decoder, connected to the address outputs for the pixel co-ordinates of the input image of the above-mentioned synchroniser, and having two control inputs,
- two AND logic circuits, each of which is connected to the output of the comparator and to the control output of the synchroniser, and one of which is connected to the first and the other to the second control output of the decoder,
- two non-volatile RAMs, in which:

-- the control inputs are independently connected to the outputs of the respective AND circuits and
-- address and data inputs are also independently connected respectively to the address inputs of the above-mentioned synchroniser;

- one decoder, connected to the address output of one of the co-ordinates of each of the pixels of the input image from the above-mentioned synchroniser (in the process, the signal corresponding to one of the co-ordinates of each of the pixels of the input image is sent to the data inputs of the first and second non-volatile RAMs of the first calculation circuit; the signal corresponding to the second co-ordinate of each of the pixels of the input image arrives at the address inputs of the same RAMs, while said signals are sent in reverse order to the corresponding inputs of the first and second non-volatile RAMs and to the decoder of the second calculation circuit),

- one differential stage with two data inputs separately connected respectively to the data outputs of said non-volatile RAMs,
- a normaliser for integer division of the digital parallel code of the signal setting one co-ordinate of each pixel of the distorted image, by the digital code of a constant setting one of the geometric dimensions of the undistorted raster (respectively along the horizontal in one calculation circuit and along the vertical in the other calculation circuit),
- a multiplier for multiplication of the digital codes of one of the normalised co-ordinates of each of the pixels of the input image by the digital code of the active dimension of the distorted raster corresponding to this co-ordinate,
- an adder for adding the digital codes of the co-ordinates of the origin of the representation of the distorted field of the image and the current increment in the co-ordinate of the processed pixel of the image in the same raster,

while each slave memory module has:

- two input multiplexers, each of which is designed for generation of the corresponding digital codes of the co-ordinates of the pixels of the input and corrected image, and connected to said multiplexers
- RAM for writing the video input signal to one address and reading the video signal of the corrected image output from the other address.

The described structure of the channels of the geometric distortion corrector most effectively facilitates the "stitching" of the integral image from the fragmentary images formed by the individual video cameras, with essentially total exclusion of information loss at the seams.

The seventh additional distinction resides in the fact that the video standards converter is combined with said RAM and has:

RAM banks with isolated data inputs, the number of banks being equal to the number of video cameras, and to each of which the following are connected:

- two address multiplexers and
- two frame buffers;

a control decoder for the RAM banks;
a first digital-to-analog converter; buffer RAM, containing:
memory modules connected in parallel, the number of which is equal to the number of video cameras, and
a buffer RAM decoder and
a second digital-to-analog converter.

The combination of the video standards converter with RAM reduces the instrumentation required to perform these functions as applied to television and especially x-ray television systems oriented toward the "stitching" of integral image from images formed by individual video cameras.

The eighth additional distinction resides in the fact that in the combined video standards converter with RAM there are:

(a) in each RAM bank:
the data inputs of the frame buffers are combined and connected to the corresponding outputs of the multichannel geometric distortion corrector, and their data outputs are also combined (including between banks) and connected to the data input of the first digital-to-analog converter;
the first inputs of the multiplexers are combined and connected to the synchronising outputs for the codes of the co-ordinates for writing the corrected images into the frame buffers in the above-mentioned synchroniser, while the second inputs of the multiplexers are also combined and connected to the synchronising outputs for the codes of the co-ordinates for reading the corrected images from the frame buffers in the above-mentioned synchroniser;
the first outputs of the first multiplexer are connected to the corresponding address inputs of the first frame buffer, while the first outputs of the second multiplexer are connected to the corresponding address inputs of the second frame buffer;

the second control input of the first multiplexer and the second inverted control input of the second multiplexer are connected to the control output of the above-mentioned synchroniser;

the first outputs of the multiplexers are connected to the address inputs, their second outputs are connected to the chip-select control inputs, and their third outputs are connected to the read-write control inputs of the corresponding RAMS;

(b) in all RAM banks:

the first control inputs of the first and second multiplexers are combined and connected respectively to the first, second, etc. outputs of the decoder, while

the data outputs of all frame buffers are combined and connected to the data input of the first digital-to-analog converter;

(c) the control input of the decoder is connected to the control output of the above-mentioned synchroniser;

(d) the first and second control inputs of the first digital-to-analog converter are connected respectively to the synchronising outputs of the above-mentioned synchroniser, while the data output of this converter is connected to the above-mentioned high-resolution monitor;

(e) the address inputs of the buffer RAM memory modules are combined and connected to the synchronising outputs of the above-mentioned synchroniser with the codes of the co-ordinates; their data inputs are connected to the corresponding outputs of the above-mentioned multichannel geometric distortion corrector; their data outputs are combined and connected to the data input of the second digital-to-analog converter; their read-write control inputs are connected to the control output of the above-mentioned synchroniser, while the data input of the last memory module of the said buffer RAM is connected to the corresponding data input of the frame buffer;

(f) the control inputs of the buffer RAM decoder are connected to the corresponding control outputs of the above-mentioned synchroniser, while the control outputs of said decoder are connected to the chip select inputs of the memory modules so that the first of the outputs is connected with said input of the first memory module, the second with the input of the second memory module, etc.;

(g) the data input of the second digital-to-analog converter is connected to the combined data outputs of the memory modules; the control inputs of this converter are connected to respectively the synchronising outputs of said synchroniser, while its data output is connected to the above-mentioned module for inputting the video signals to the PC.

The specific structure described of the combination video standards converter with RAM is preferable for the formation of an integral large-format high-resolution image form many (10 and above) constituent parts, each of which is separately characterised by substantially lower resolution.

The ninth additional distinction resides in the fact that the synchroniser has:

the first driving generator of synchronising signals corresponding to the resolution standard of the video cameras, whose clock output is connected to the clock inputs of the above-mentioned ADC modules and the multichannel threshold controller, and

at least one second driving generator of synchronising signals, corresponding to the high-resolution standard for the synthesized image;

two groups of counters respectively for the X and Y co-ordinates of the pixels of the images formed by each of the video cameras, and

two groups of counters respectively for the $X_m$ and $Y_m$ co-ordinates of the pixels of the synthesized high-resolution image;

at least one sync pulse selector designed to select the original synchronising pulses from the total television signal and to form output horizontal and vertical synchronising pulses;

two digital comparators respectively for the codes of the $X_m$ and $Y_m$ co-ordinates;

two monostable multivibrators for the formation of horizontal (line) and vertical (frame) pulses corresponding to the high-resolution standard;

at least one counter to count the number of pixels in the synthesized high-resolution image;

an AND circuit for conjunction in the process of formation of control signals for the above-mentioned geometric distortion corrector;

an input register for receiving the control commands by said synchroniser sent from the PC;

an output register for sending information about the state of said synchroniser to the PC, and

an address decoder for the programmable port of the computer for outputting the control commands to said synchroniser,

in which case:

the first driving generator is connected to the count input of the first group of X co-ordinate counters;

the count input of the second group of Y co-ordinate counters is connected to the output of the horizontal synchronising pulses of the sync pulse selector;

the first group of $X_m$ co-ordinate counters is connected through the count input to the output of the second driving generator of synchronising signals;

the count input of the second group of $Y_m$ co-ordinate counters is connected to the output of the $X_m$ co-ordinate counters through one of the digital comparators and one of the monostable multivibrators, connected in series;

the reset inputs of the first group of X co-ordinate counters and of the first group of $X_m$ co-ordinate counters are connected to the output of the horizontal synchronising pulses of the sync pulse selector;

the reset input of the second group of Y co-ordinate counters is connected to that output of the sync pulse selector from which the vertical synchronising pulses corresponding to the full frame of the output image of the video cameras must be taken;

the reset input of the second group of $Y_m$ co-ordinate counters is connected to that output of the sync pulse selector from which the vertical synchronising pulses corresponding to the half-frame of the output image of the video cameras must be taken;

the output of the first group of $X_m$ co-ordinate counters is connected:

- to the inputs of all the multiplexers and to the input of the memory bank control decoder of the above-mentioned video standards converter with RAM, and
- through the first digital comparator and the first monostable multivibrator, connected in series, to the digital-to-analog converter of the same converter with RAM, and also
- to the count input of the second group of $Y_m$ co-ordinate counters;

the output of the second group of $Y_m$ co-ordinate counters is connected:

- to the inputs of all the multiplexers of the above-mentioned video standards converter with RAM, and
- through the second digital comparator and the second monostable multivibrator, connected in series, to the digital-to-analog converter of the same converter with RAM, and also
- to the count input of the counter of the number of pixels of the synthesized high-resolution image;

the input register is connected:

- through a parallel data input to the computer,
- through the first output to the reset input of the counter of the number of pixels of the synthesized high-resolution image and to the control input of the video standards converter with RAM,
- through the second output to the second input of the AND circuit;
- through the third output to the reset input of the D flip-flop;

the output register is connected:

- through the first input to the output of the vertical synchronising pulses of the above-mentioned sync pulse selector,
- through the second input to the output of the counter of the number of pixels of the synthesized high-resolution image,
- and through the output to the PC;

the address decoder of the programmable port of said PC for outputting control commands to the above-mentioned synchroniser is connected:

- through the input to the address bus of the PC, and
- through the output to the input of the input register;

the counter of the number of pixels of the synthesized high resolution image is additionally connected to the control input of the buffer RAM decoder of the above-mentioned video standards converter with RAM.

Despite the seeming abundance of functional modules, the described construction of the synchroniser represents the simplest embodiment of the inventive conception for the needs of the proposed high-resolution x-ray television system.

The tenth additional distinction resides in the fact that the synchroniser is additionally equipped with a second AND circuit and a D flip-flop, and:

said AND circuit is connected through one input to the output of the driving generator of synchronising signals corresponding to the resolution standard of the video cameras, through a second input to the inverted output of the D flip-flop, while the output may be used in a supplementary circuit for generation of input signals for the above-mentioned geometric distortion corrector, while said D flip-flop is connected:

- through the data input to the control output of the above-mentioned multichannel threshold controller,
- through the synchronising output to the output of the selector of sync pulses corresponding to a full frame of the input image,
- through the reset input to the third output of the above-mentioned input register.

These additions facilitate enhancement of the quality of the operation of the geometric distortion corrector and, accordingly, the quality of the output image.

The eleventh additional distinction consists in the fact that the television system is in addition equipped with a digital video signal amplitude corrector which is connected to the input of the multichannel geometric distortion corrector, with interframe digital video signal accumulators, whose number is usually equal to the number of video cameras and which are inserted between the ADC module and said digital video signal amplitude corrector, and with a multichannel threshold controller, which is connected to the outputs of the digital video signal amplitude corrector, is connected through the above-mentioned synchroniser to the control inputs of the interframe digital video signal accumulators, and is equipped with a feedback control output in a feedback loop with the source of primary (x-ray) radiation.

A more complex high-resolution television system of this kind is preferable for the needs of x-ray diagnostics.

The twelfth additional distinction resides in the fact that the digital video signal amplitude corrector is multichannel, and has in each channel:

two non-volatile RAMs, which are respectively intended for storage of the codes for the correction factors of the "black" level and maximum excursion of the video signal for each pixel of the input image from the video camera corresponding to the given channel;

a differential stage for calculating the difference between the codes of the input signal and the "black" level for each pixel of the input image from the corresponding video camera;

a divider for calculating the normalised amplitude correction factors for the video input signals by dividing the constant setting the code for the maximum excursion of the video signal for the selected video cameras and ADCs by the varying code corresponding to the maximum excursion of the video signal for each active pixel of the image input from the corresponding video camera;

an address decoder for the programmable port of the PC for sending control commands to the given channel of the digital video signal amplitude corrector, in which the input is connected to the address bus of the PC;

an input register to receive control commands coming from the PC, in which:

- the first input is connected to the PC data bus, the second input to the output of the address decoder, while
- the outputs are connected to the control inputs of the non-volatile RAMS;

an output multiplier for generation of codes for the normalised video output by multiplication of the aforementioned normalised factors times the code of the difference signal),

and:

the first RAM is connected:

- through the data input to the output of the corresponding channel of the above-mentioned ADC module,
- through the control input to the first output of the input register,

the second RAM is connected:

- through the data input to the output of said differential stage,
- through the control input to the second output of the input register, while

both RAMs are connected through the address inputs to the X, Y output of the above-mentioned synchroniser;

the differential stage is connected:

- through the first input to the output of the corresponding channel of the above-mentioned ADC module,
- through the second input to the output of the first RAM,
- through the output to the first input of the said multiplier;

the divider is connected between the output of the second RAM and the second input of the multiplier.

The described structure of the digital video signal amplitude corrector is preferable for high-resolution roentgenoscopic television systems which, in the context of the limitations of the permissible absorbed doses, must consistently operate at x-ray power densities which are as low as possible. The use of such correctors in systems used to monitor the course of surgical procedures is especially important.

The thirteenth additional distinction resides in the fact that the multichannel threshold controller has:

(a) in each channel:

- a first comparator for comparing the codes of the pixels of the image formed by the video camera corresponding to the given channel, with the code of the threshold,
- an AND circuit, which through the first input is connected to the output of the comparator and is designed for strobing the clock signal with the output signal of this comparator,
- a counter, the count input of which is connected to the output of the AND circuit, which serves to calculate the number of such pixels, in the image frame corresponding to the video camera connected to the given channel, whose code exceeds the pre-set threshold luminance value,
- a register, the data input of which is connected to the output of the counter and which serves to store the parallel output code of this counter,

a second comparator whose input is connected through the register to the output of the counter which serves to compare the output code of this counter with the pre-set threshold number of pixels of the image that have a luminance no less than the afore-mentioned threshold value, and

- a trigger, in which the data input is combined with the output of said comparator which serves to write the logical output signal of this comparator at the end of the frame synchronisation pulse from the above-mentioned synchroniser; and

(b) the following, in common for all channels:
an address decoder for the programmable port of the PC for outputting to the multichannel threshold controller the codes of the luminance threshold values, of the number of pixels with a luminance no less than the threshold value, and of the number of channels with logic level "1" at the outputs, in which the input is connected to the address bus of the PC,

- an input register for receiving the codes of said threshold values arriving from the PC, in which the first (data) input is connected to the PC data bus, while the second (clock) input is connected to the output of the address decoder, the first output (of the code of the luminance threshold value) is connected to the combined first inputs of the first comparators of all channels, while the second output (of the number of pixels with a luminance no less than the pre-set value) is connected to the combined second inputs of the second comparators of all channels,
- a multiplexer for multiplexing the output signals of all channels, in which each of the data inputs are connected to the outputs of the triggers of the corresponding channels, while the control input is connected to the synchronising output of the above-mentioned synchroniser with the X co-ordinate code;
- an AND circuit for strobing the clock signal with the output signal of said multiplexer, in which the first input is connected to the output of the multiplexer, while the second input is connected to the combined second inputs of the AND circuits of each of the channels of the multichannel threshold controller and is connected to the clock output of the above-mentioned synchroniser;
- a counter for counting the number of those channels whose signals at the outputs of the triggers have logic level "1", and which is connected through the count input to the output of said AND circuit, while it is connected through the reset input across the inverter to the output of the frame synchronization pulses of the above-mentioned synchroniser;
- a comparator for comparing the output code of the counter with the threshold value of the number of channels with logic level "1" at the outputs, connected through the first and second data inputs respectively to the output of the counter and the third output of said input register, while it is connected through the output to the controller of the primary (x-ray) radiation source,
- a trigger for writing and storing the output signal of said comparator, connected through the data input to the output of said comparator, through the clock input across said inverter to the frame synchronization pulse output of the synchroniser, and connected through the control output to the above-mentioned interframe digital video signal accumulators across the synchroniser;

in which case:
(c) in each of the channels, the following are combined and jointly connected to the output of the frame synchronization pulses of the above-mentioned synchroniser:

- the reset inputs of the counters of the number of pixels with a luminance no less than the pre-set value,
- the clock inputs of all registers and
- the clock inputs of all triggers, while

(d) the second inputs of the first comparators of all channels are connected to the corresponding data outputs of the above-mentioned digital video signal amplitude corrector.

The proposed construction of the multichannel threshold controller makes it possible, when using the proposed x-ray television system for mass roentgenographic screenings, first, to regulate effectively the operation of the primary x-ray source in accordance with the criteria of permissible absorbed dose, and of the required quality of the synthesized integral image, and second, to optimise the operation of the interframe accumulators.

Brief description of diagrams

The essence of the invention is further explained by a detailed description of the proposed device with references to the appended diagrams, where the following are depicted on:

fig. 1 - block diagram of the proposed high-resolution television system in the simplest form of the hardware requirement for the inventive conception;
fig. 2 - block diagram of the proposed high-resolution television system in the improved form of the hardware requirement for the inventive conception;
fig. 3 - functional block diagram of the multichannel geometric distortion corrector;
fig. 4 - functional block diagram of the standards converter with internal memory (RAM);
fig. 5 - functional block diagram of the synchroniser;
fig. 6 - functional block diagram of one channel of the multichannel video signal amplitude corrector from fig. 2;
fig. 7 - functional block diagram of one channel of the interframe accumulator from fig. 2;
fig. 8 - functional block diagram of the multichannel threshold controller from fig. 2;
fig. 9 - schematic of test-object with vertical disposition of the three-dimensional target;
fig. 10 - schematic of test-object with horizontal disposition of the three-dimensional target.

Preferred versions of hardware requirements of the inventive conception

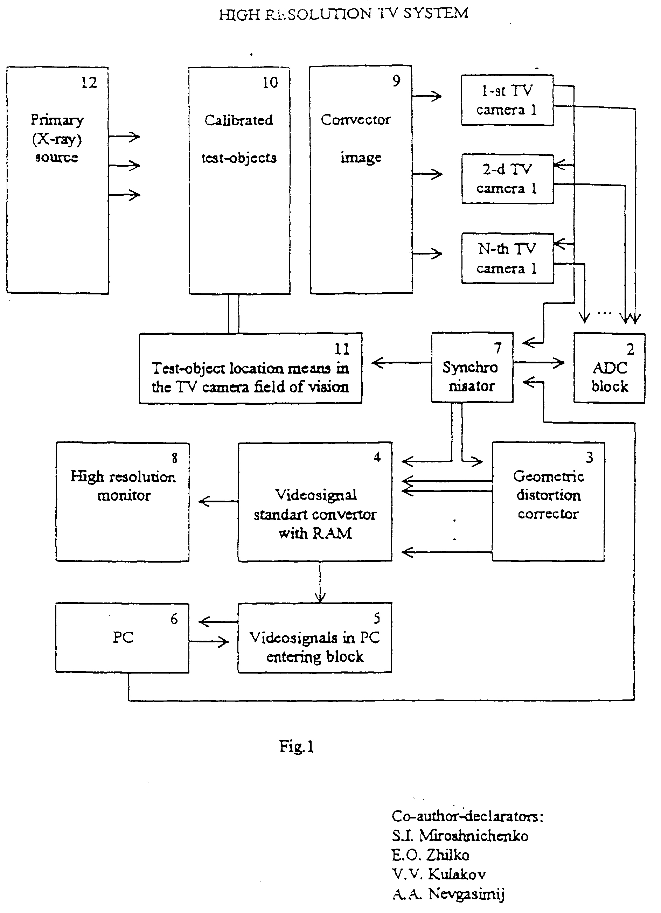

The proposed high-resolution television system, in the simplest form of the hardware requirement (see fig. 1), has, at a minimum:

at least two video cameras 1, which:

- are conjointly aligned so that their fields of view overlap slightly (these cameras can be placed in horizontal and/or vertical rows, or when necessary, along the diagonal of an arbitrary rectangular profile) and
- are typically interconnected electrically by an external vertical and horizontal sweep synchronization circuit, operating from the output of one of the video cameras;

a module 2 of analog-to-digital converters (from here on, ADCs), the number of which is equal to the number of video cameras 1 electrically connected to their inputs, and each of which ADC has a clock input, not specially designated;
a multichannel geometric distortion corrector 3, which has (not specially designated, as will be the case from here on in similar instances, since this is obvious to specialists in electronics):

- signal inputs, connected to the outputs of ADC module 2,
- a control input for transferring addresses, clock pulses, and commands;
- outputs of corrected digital video signals;

a standards converter 4 for the video image, combined with internal memory (RAM), based, for example, on static memory (in particular, of the SRAM 128Kx8 type, in the form of the commercially available TOSHIBA TC558128AJ microcircuits), which:

- is electrically connected to the signal inputs of said corrector 3,
- has a control input for the transmission of addresses, clock pulses, and commands and
- is equipped with at least one data output, and preferably two data outputs for the transmission of corrected digital video signals to users;

video input module 5 for inputting the video signals (again in digital form) into the computer (preferably a personal computer), which is electrically connected to one of the data outputs of said converter 4 and has at least one "data input-data output" pair;
a high-speed PC 6 which is electrically connected to said module 5 by direct coupling and feedback across said "data input-data output" pair;
a synchroniser 7, which has:

- a synchronising control input, electrically connected to the last of the video cameras 1 to receive the vertical and horizontal sweep sync signals,
- synchronising control outputs to the clock inputs of each of the ADCs in module 2,
- input/output for the data feedback from said PC 6;
- control and synchronising outputs to the address inputs of said multichannel corrector 3,
- control and synchronising outputs to said video image standards converter 4 and RAM, and
- a control and synchronising output to said, and from here on designated, device for facilitating adjustment of the system.

A high-resolution monitor 8 may be connected to a second, additional output of the video image standards converter 4 for the direct demonstration of the television (in particular, x-ray television) image to the user of the visual information.

The video cameras 1 may be both conventional (for example, based on the VIDICON-type image tubes) and based (which is preferable) on CCD arrays, in particular of the Mintron Enterprises (USA) MTV-1802 type, or the Tektonix (USA) TK 2048 type with 2048 x 2048 pixels with buried channel, three-phase control, and a dynamic range of 80 dB (such an array measures 55.3 x 55.3 mm and the pixel size is 27 x 27 $\mu$m).

Video cameras of the first two of these types are preferable for high-speed x-ray television systems with a frame rate no less than 25 frames per second. Video cameras of the third type are preferable for high-resolution television systems for the processing of large-format initial images with a minimal number of "seams" of individual parts into the integral final image (for example, the archiving of aerial or space photographs, in which frame rate is not a critical parameter).

Any suitable, commercially available microcircuits can be used as the ADCs in module 2, for example, of the Analog Device, USA, AD876 type; the use of a multichannel ADC with electrically isolated channels according to the number of video cameras 1, is also possible.

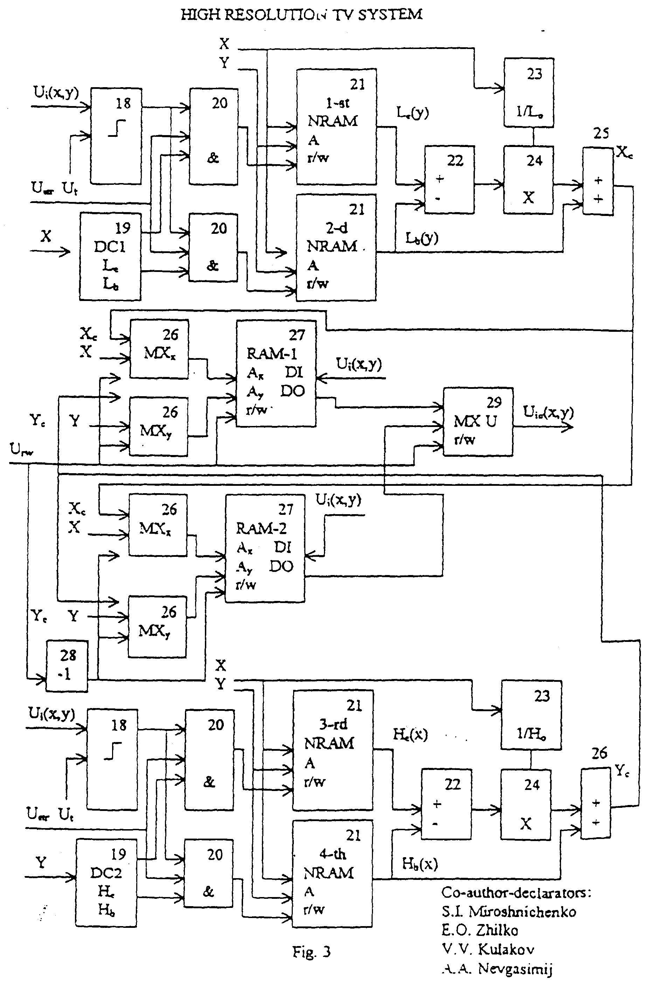

The multichannel geometric distortion corrector 3 is described below in detail, with references to fig. 3.

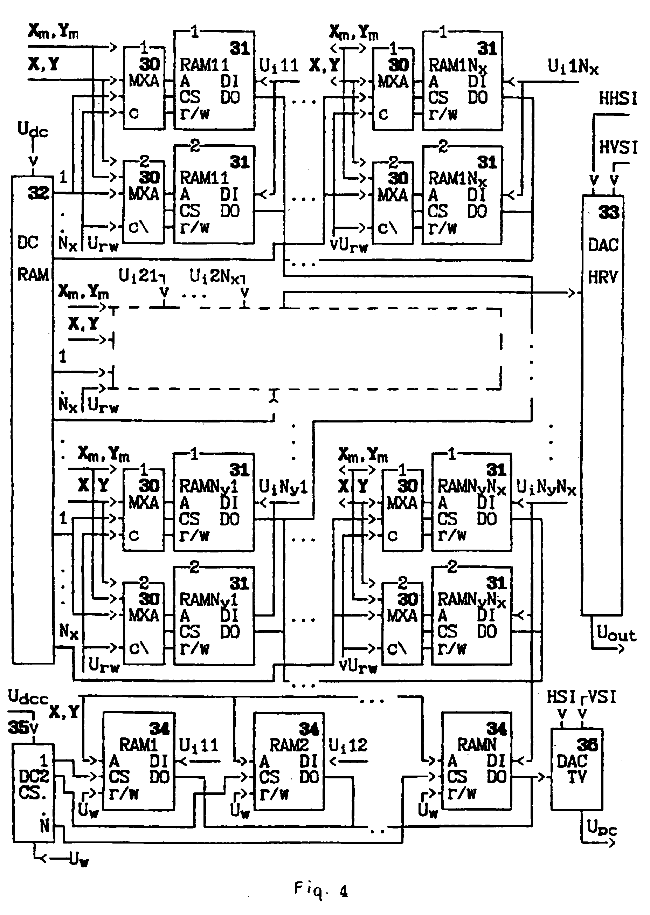

The video image standards converter 4 with RAM may be constructed on the basis of a multichannel RAM, decoder, and multiplexers, as is described below in detail, with references to fig. 4.

Module 5 for inputting the video signal into PC 6 may be constructed in the form of commercially available, standard devices, well-known to specialists, for example, the AVER series.

Any suitable computer (preferably based on Pentium processors) may be used as the high-speed PC.

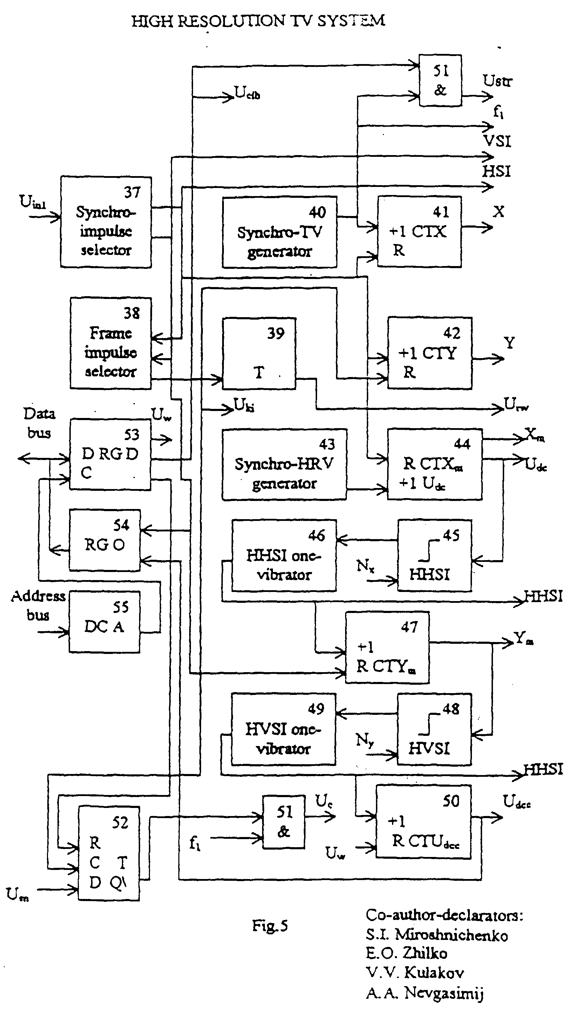

Synchroniser 7, which is shown in greater detail in fig. 5 and is later described in detail, may be realised on the basis of suitable frame and line sweep sync pulse selectors and suitable control clock and address pulse generators, known to electronics specialists.

In the form described, the proposed television system may be used as such for the needs, for example, of electronic archiving (in digital form) of large-format pictures (for example: aerial or x-ray photographs).

And, finally, when the proposed television system is used as a component of more complex systems (for example, x-ray diagnostic systems), it must have a converter 9 for converting electromagnetic radiation from one frequency range to another (in particular, converting X-radiation to visible radiation).

This converter 9 typically has the form of a not specially designated, primarily x-ray sensitive, fluorescent screen, or an x-ray optoelectronic transducer (XROET), or a scintillating fibre optic plate.

At the same time, the objectives of all video cameras 1 must be turned toward said converter 9 on its optical output side. Correspondingly, a suitable primary (in particular, X-ray) radiation source 12 must be provided for in the system, placed at the optical input of converter 9, the selection of which for the needs of roentgenoscopy or roentgenography does not present difficulties for specialists.

To facilitate adjustment, especially in cases of alteration of the number and/or relative arrangement of video cameras 1 and/or their distance to the object under examination or observation and/or converter 9, It is highly preferable that the following be included in the television system:

calibration test objects 10 and
a device 11 for placing them in the field of view of video cameras 1 during alignment and adjustment of the television system, and for removing them from the field of view of video cameras 1 before going into operating mode, connected to the synchronising control output of synchroniser 7, and
in order for synchroniser 7 to be connected with said PC 6 through the afore-mentioned data feedback loop;

Calibration test objects 10 comprise three-dimensional targets, which are described in greater detail below.

Any suitable, commercially available manipulator or projector can be used as device 11 for placing and removing test objects 10, for example, a standard x-ray film cassette feed mechanism which has a fairly high (usually less than ± 1 mm) positioning accuracy.

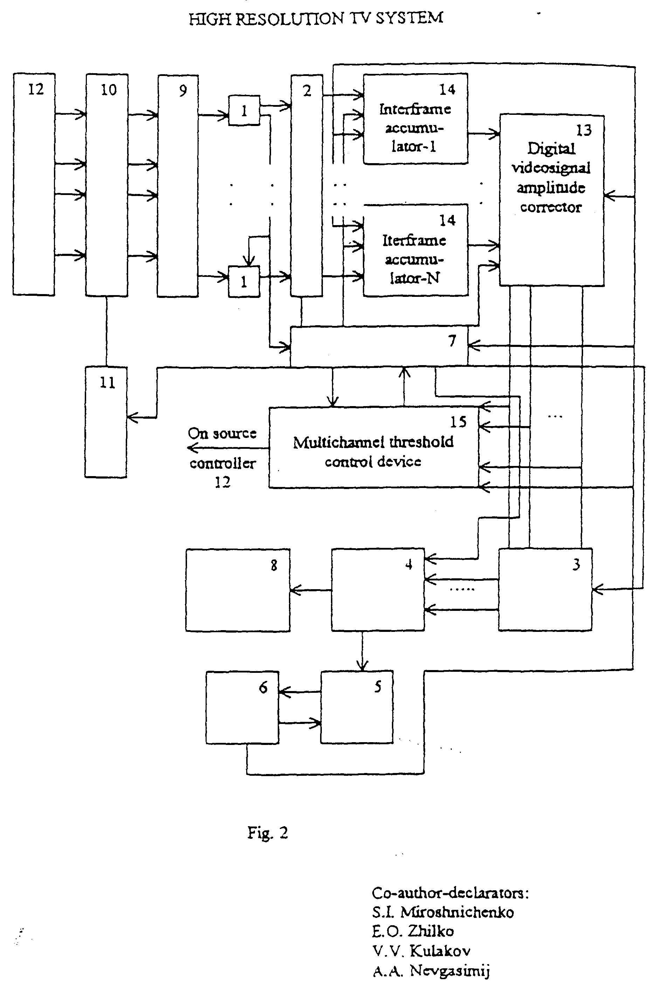

A more complex high-resolution television system, which is preferable for the needs of x-ray diagnostics, may be additionally equipped (see fig. 2):

with the digital video signal amplitude corrector 13, which is connected to the input of multichannel geometric distortion corrector 3,
with interframe digital video signal accumulators 14, the number of which is usually equal to the number of video cameras 1 and which are inserted in the interval between ADC module 2 and said digital video signal amplitude corrector 13, and
with a multichannel threshold controller 15.

The multichannel video geometric distortion corrector 3, in which the number of channels is equal to the number of video cameras 1, is a fundamentally new module for the proposed television system in any of its possible realisations, regardless of whether a specific realisation provides for the use of calibration test objects 10 (vertical and/or horizontal three-dimensional targets) during adjustment.

This corrector 3 is designed to combine ("stitch together") the fields of view of different video cameras 1 into a unified high-resolution image field by elimination of geometric distortions of the fragmentary images, which may be due to differences in scales and shape of such images not usually noticed when viewed separately and inaccuracies in the mounting of individual video cameras 1.

In the simplest case, the individual optical parameters of the video cameras 1 and the geometric parameters of their specific relative arrangement should be taken into account beforehand in said corrector 3 as correction factors to be used later for correction of the video signals.

Later a more complicated version of the realisation of the inventive conception is shown, providing for the use of two (vertical and horizontal) three-dimensional targets for automatic adjustment of the television system.

As applied to such cases, corrector 3 in each channel preferentially has at the input (see fig. 3):

two identical calculation circuits 16 to calculate the codes for the corrected $X_c$ and $Y_c$ co-ordinates for each pixel of the image output, based on the codes of the original co-ordinates X and Y of the corresponding pixels of the image input and the correction factors, and
two identical slave memory modules 17 (possibly half-frame, but preferentially full-frame) for the digital video input, connected to said calculation circuits 16 as the sources for the addresses for readout of the information on the corrected elements of the video output.

Each of the calculation circuits 16 has:

an input comparator 18 with fixed value of the threshold digital code $U_t$, connected to the output of one of the ADCs of module 2;
a decoder (DC) 19, connected to an address output (X, or Y) of the synchroniser 7 and having two control outputs;
two AND (&) logic circuits 20, each of which is connected to the output of comparator 18 and to the control output

$U_{str}$ Of synchroniser 7, and one of which is connected to the first control output of decoder 19 and the second of which is connected to the second control output of decoder 19;
two non-volatile RAMs 21 (NRAM), in which:

- the control (read-write and from here on designated "r/w") inputs are independently connected to the outputs of the corresponding AND (&) logic circuits 20,
- the address and data inputs are also independently connected respectively to the X and Y outputs of synchroniser 7 so that in the 1st and 2nd RAM 21 of the first calculation circuit 16, the X signal is sent to the data inputs and the Y signal is sent to the address inputs, and vice versa in the 3rd and 4th RAM 21 of the second calculation circuit 16: the Y signal is sent to the data inputs and the X signal is sent to the address inputs;

the differential stage 22 with two data inputs separately connected respectively to the data outputs of the non-volatile RAMs (NRAM) 21, which is necessary for setting the codes of the final and initial abscissas $L_e(y)$ and $L_b(y)$ in the first calculation circuit 16 and the codes of the final and initial ordinates $H_e(x)$ and $H_b(x)$ in the second calculation circuit 16 as the boundaries of the raster with respect to the test images of the three-dimensional targets when adjusting the television system;
(preferably) a tabular normaliser 23, which provides integer division of the digital parallel code of one of the input X (or Y) signals by the digital code of the constant setting the geometric dimension of the undistorted raster $L_O$ along the horizontal (or $H_O$ along the vertical) respectively for the first and second calculation circuits 16;
a multiplier 24 for multiplying the digital codes of the normalised X (or Y) co-ordinate times the digital code of the active dimension of the raster along the horizontal (or the vertical) and
an adder 25 for summing the digital codes of the co-ordinates of the origin of the representation of the distorted image field and the current increment in the co-ordinate of the processed picture element (pixel) in the same raster.

Each slave memory module 17 has:

two input multiplexers 26, each of which (the first $MX_x$ for the X co-ordinate, and the second $MX_Y$ for the Y co-ordinate) is designed to generate the corresponding digital codes for the co-ordinates of the pixels of the input and corrected images, and connected to them are
RAMs 27 (possibly half-frame, but preferentially full-frame) for writing the video input to one address and reading the video output from another address.

Along with the calculation circuit modules 16 and slave memory modules 17 which are described in detail above, said corrector 3 at the output of each channel has (see fig. 3):

an inverter 28, which is connected between the above-mentioned synchroniser 7 and the control inputs of multiplexers 26 and the RAM 27 of one of the slave memory modules 17;
an output multiplexer 29, which is designed for alternate connection of the outputs of slave memory modules 17 to the input of video standards converter 4 with RAM.

The number of outputs of the decoders 19 (DC1 and DC2), the AND (&) logic circuits 20, and the non-volatile RAMs 21 (NRAM), shown in fig. 3, correspond to two lines of the three-dimensional targets for each of the calibration test objects 10. With an increase in the number of lines in the targets, the number of said outputs of decoders 19 and elements 20 and 21 should be accordingly increased, while between the outputs of RAMs 21 and the inputs of differential stages 22 additional multiplexers should be included, preferentially of the same type as multiplexers 26.
The video standards converter 4 with RAM (see fig. 4) has:

independent RAM banks, the number of which is equal to the number of video cameras 1 and to each of which are connected:

- two address multiplexers 30 (MXA) and
- two frame buffers 31;

control decoder 32 (DC) for RAM banks;
the first digital-to-analog converter 33 (DAC HRV);
buffer RAM containing:

- memory modules 34 connected in parallel (RAM1-RAMN) , the number of which is equal to the number of video cameras 1 and

- decoder 35 (DC CS) for the buffer RAM and

the second digital-to-analog converter 36 (DAC TV).

For each of the afore-mentioned RAM banks, the following is characteristic:

in frame buffers 31, the data inputs (D1) are combined and connected to the corresponding outputs ($U_i$11, $U_i$12, .. $U_i$1$N_x$, $U_i$21, $U_i$22, .. $U_i$2$N_x$, .. $U_i N_y N_x$) of multichannel geometric distortion corrector 3, while the data outputs (DO) are also combined (including also between memory banks) and are connected to the data input of the first digital-to-analog converter 33;
in multiplexers 30, the first inputs are combined and connected to the synchronising outputs of synchroniser 7 with the codes of the X,Y co-ordinates for writing the corrected images to frame buffers 31, while the second inputs are also combined and connected to the synchronising outputs of synchroniser 7 with the codes of the $X_m, Y_m$ co-ordinates for reading out the corrected images from frame buffers 31;
the first outputs of the first multiplexer 30 are connected to the corresponding address inputs of the first frame buffer 31, while the first outputs of the second multiplexer 30 are connected to the corresponding address inputs of the second frame buffer 31;
the second control input (C) of the first multiplexer 30 and the second inverted control input (C\) of the second multiplexer 30 are connected to the control output of synchroniser 7 ($U_{rw}$);
the first outputs of multiplexers 30 are connected to the address inputs (A), their second outputs are connected to the select control inputs (CS), and their third outputs are connected to the control outputs (r/w) of the corresponding RAMs 31.

In all the RAM banks, the first control inputs of the first and second multiplexers 30 are combined and connected respectively to the first, second, etc. outputs of decoder 32.
The control input of decoder 32 is connected to the control output ($U_{dc}$) of synchroniser 7.
In all the RAM banks, the data outputs (DO) of all frame buffers 31 are combined and connected to the data input of the first digital-to-analog converter 33 (DAC HRV).
In the first digital-to-analog converter 33 (DAC HRV):

the first and second control inputs are respectively connected to the synchronising outputs (HHSI) and (HVSI) of synchroniser 7, while
the data output ($U_{out}$) is connected to the above-mentioned high-resolution monitor 8.

In each memory module 34 (RAM1-RAM$\underline{N}$) of the buffer RAM:

the address inputs (A) are combined and connected to the synchronising outputs of synchroniser 7 with the codes for the X,Y co-ordinates;
the data inputs (D1) are connected to the corresponding outputs of the multichannel geometric distortion corrector 3;
the data outputs DO are combined and connected to the data input of the second digital-to-analog converter 36 and the control Inputs (r/w) are connected to the control output of synchroniser 7. Furthermore, the data input (D1) of the last memory module 34 RAM$\underline{N}$ is connected to the corresponding data input (D1) of frame buffer 31 (RAMN-$_Y N_x$).

The control ($U_{dcc}$) and ($U_w$) inputs of decoder 35 (DC CS) of the buffer RAM are connected to the corresponding control outputs of synchroniser 7.
The control outputs of said decoder 35 are connected to the select inputs (CS) of memory modules 34 so that the first of said outputs is connected to said input of the first module 34, the second is connected to the input of the second module 34, etc.
In the second digital-to-analog converter 36 (DAC TV):

the data input is connected to the combined data outputs (DO) of memory modules 34,
the control inputs (HSI) and (VSI) are respectively connected to the synchronising outputs of synchroniser 7,
while the data output $U_{pc}$ is connected to module 5 for inputting the video signals into the computer.

Synchroniser 7 has (see fig. 5):

a sync pulse selector 37, which is designed to extract from the total input video signal ($U_{in1}$) the original synchronising pulses and to generate output line (i.e. horizontal- HSI) and half-frame (i.e. vertical - VSI) synchronising pulses, and is connected:

- through the input to the synchronization output of one of the video cameras 1, while
- through the synchronising outputs (HSI) and (VSI) to respectively the control inputs of digital-to-analog converter 36 of video standards converter 4 with RAM described above (shown in fig. 4);

a frame pulse selector 38, the inputs of which are connected respectively to the outputs of the fine (HSI) and half-frame (VSI) synchronising pulses of selector 37, while the output $U_{ki}$ is connected to the synchronising input of the multichannel threshold controller 15 described in detail later;

a counter T flip-flop 39 (T), the input of which is connected to the output of selector 38, while its output is connected to the control inputs of multiplexers 30 of video standards converter 4 with RAM (shown in fig. 4);

a driving generator 40 of the synchronising ("TV sync") signals, corresponding to the resolution standard of video cameras 1, the output ($f_1$) of which is connected to the clock inputs of the above-mentioned ADC modules 2 and the multichannel threshold controller 15 and which is built, for example, on the basis of a suitable commercially available quartz resonator;

a generator of the codes for the X and Y co-ordinates, not distinguished and not specially designated, which is built on the basis of:

- counter 41 (CTX) for counting the number of pixels per line of the image for each of the video cameras 1, in which the count input (+1) is connected to the output of TV sync generator 40, while the reset input (R) is connected to the output (HSi) of sync pulse selector 37, and
- counter 42 (CTY) for counting the number of lines in the images formed by each of the video cameras 1, the count input (+1) of which is connected to the output (HSI) of sync pulse selector 37;

a driving generator 43 of the synchronising signals corresponding to the high-resolution standard (HRV) of the synthesized high-resolution image output and built, for example, on the basis of an appropriate commercially available quartz resonator;

a counter 44 ($CTX_m$) for counting the number of pixels per line of the synthesized image, in which:

- the count input (+I) is connected to the output of said generator 43 (sync-HRV),
- the reset input (R) is connected to the output (HSI) of sync pulse selector 37,
- the first output ($X_m$) is connected to the synchronising input ($X_m$), while

the second output ($U_{dc}$) is connected to the control input of the video standards converter 4 with RAM described above;

a digital comparator 45 (HHSI):

- connected through the data input to the second output ($U_{dc}$) of counter 44 ($CTX_m$) for counting the number of pixels per line of the synthesized high-resolution image and
- designed for sequential comparison of the codes for the co-ordinates ($X_m$) of the active pixels in a line of the synthesized high-resolution image with fixed threshold code $N_x$ of the co-ordinate for the end of the line of the given image, determined by the number of video cameras 1 disposed horizontally in a row;

preferably, a monostable multivibrator 46 (HHSI) for generation of the line sync pulses for the video signal of the synthesized high-resolution image, in which:

- the input can be connected to the control output of said counter 44 ($CTX_m$) for counting the number of pixels per line of the synthesized high-resolution image, while
- the output (HHSI) can be connected to the control input of the above-mentioned video standards converter 4 with RAM;

counter 47 ($CTY_M$) for counting the lines of the synthesized high-resolution image, in which:

- the count input (+I) is connected to the output of said monostable multivibrator 46 (HHSI),
- the reset input (R) is connected to the output (VSI) of the sync pulse selector 37, and
- the output ($Y_m$) is connected to the synchronising input ($Y_m$) of video standards converter 4 with RAM;

a digital comparator 48 (HVSI)

- is connected through the data input to the output ($Y_m$) of counter 48 (CTYM) for counting the number of lines in the synthesized high-resolution image and
- is designed for sequential comparison of the codes for the co-ordinates ($Y_m$) of the lines of the synthesized high-resolution image with fixed threshold code $N_y$ for the co-ordinate of the end of a frame of the given image determined by the number of video cameras 1, disposed vertically in a column;

preferably, a multistable monovibrator 49 (HVSI) for generation of frame sync pulses for the video signal of the synthesized high-resolution image, which may be connected:

- through the input to the output of comparator 48, while
- through the output (HVSI) to the control input of the above-mentioned video standards converter 4 with RAM;

counter 50 ($CTU_{dcc}$) for controlling the readout from the buffer RAM of the video standards converter 4 with RAM when inputting the synthesized image to PC 6, in which the count input (+1) is connected to the output of said monostable multivibrator 49 (HVSI);
two AND (&) logic circuits 51 for performing the conjunction operation for generation of the control signals $U_{str}$ and $U_c$, sent respectively:

- to multichannel geometric distortion corrector 3 for switching non-volatile RAMs 21 (NRAM) to write or read modes for writing or reading the codes for the co-ordinates of the boundaries of the test images when adjusting the system and
- to interframe accumulators 14 for terminating the accumulation when adjusting the system. In order to do this, the first inputs of the logic circuits are combined and connected to the output ($f_1$) of driving generator 40, the output ($U_{str}$) of the first AND (&) circuit 51 is connected to the corresponding control input of the above-mentioned geometric distortion corrector 3, while the output ($U_c$) of the second AND (&) circuit 51 is connected to the combined control inputs of the interframe accumulators 14;

a D flip-flop 52, which is designed for synchronising the start of generation and setting the duration of the control signal $U_c$ sent to the interframe accumulators 14, and in which:

- the synchronising input (C) is connected to the output of frame pulse selector 38,
- the data input (D) is connected to the control output ($U_{sn}$) Of multichannel threshold controller 15 described in detail later, while
- the inverted output (Q\) is connected to the second input of the second AND (&) circuit 51;

an input register 53 (RG D) for synchroniser 7 to receive the control commands sent from PC 6, in which:

- the parallel data input (D) is connected to the data bus of PC 6

the first output ($U_w$) is connected to the reset input (R) of counter 50 ($U_{dcc}$) and the control input of video standards converter 4 with RAM,

- the second output ($U_{clb}$) is connected to the second input of the first AND (&) circuit and to the control input of the above-mentioned device 11 for positioning the test objects in the field of view of the video cameras (see fig. 2), and
- the third output is connected to the reset input (R) of D flip flop 52;

an output register 54 (RG O) for outputting information on the state of synchroniser 7 to PC 6, in which:

- the first input is connected to the output (VSI) of the above-mentioned sync pulse selector 37,
- the second input is connected to the output $U_{dcc}$ of counter 50,
- while the output is connected to the data bus of PC 6;

an address decoder 55 (DC A) for the programmable port of PC 6 for outputting the control commands to synchroniser 7, in which:

- the input is connected to the address bus of PC 6, while
- the output is connected to input C of input register 53.

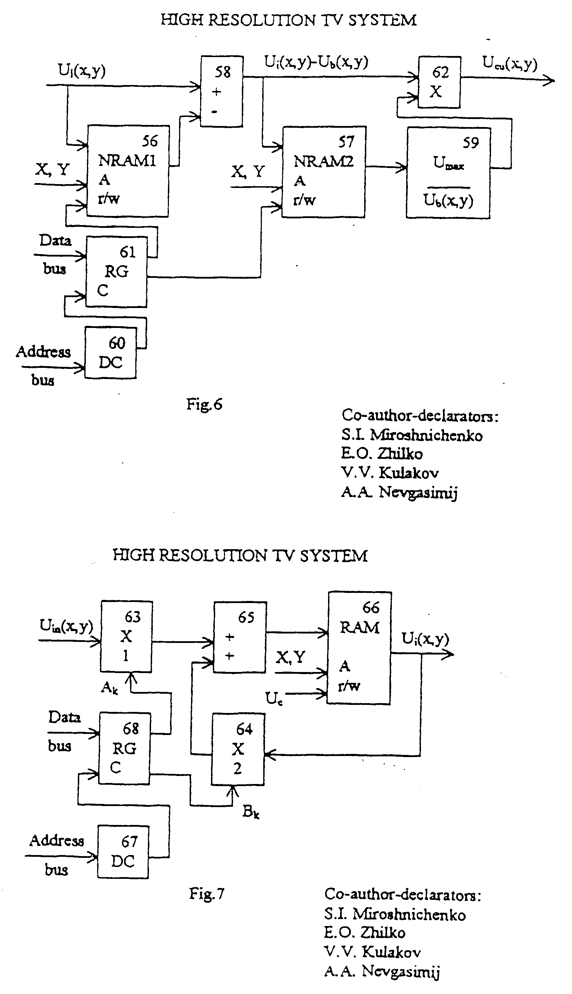

Multichannel digital video signal amplitude corrector 13 as a whole is designed for matching the video signals of video cameras 1 with respect to amplitude parameters (usually with respect to excursion and "black" level) mainly during lengthy roentgenoscopic examinations or when monitoring surgical operations. This corrector 13 is a set of channels with isolated inputs, the number of channels of which is equal to the number of video cameras 1, and in each channel (see fig. 6) there are:

preferentially two non-volatile RAMs 56 (NRAM1) and 57 (NRAM2) which are respectively designed for storing the codes of the correction factors for the "black" level and the maximum excursion of the video signal for each pixel of the image input from the video camera 1 corresponding to the given channel;
a differential stage 58 for calculating the difference between codes for the input signal $U_i(x,y)$ and the "black" level $U_b(x,y)$ for each pixel of the image input from the corresponding video camera 1;
a divider 59 for calculating the normalised amplitude correction factors for the video input signals by dividing the constant setting (for the selected video cameras 1 and ADCs 2) the code $U_{max}$ for the maximum excursion of the video signal, by the varying code $U_w(x,y)$ corresponding to the maximum excursion of the video signal for each active pixel of the image input from the corresponding video camera 1;
an address decoder 60 (DC) for the programmable port of PC 6, for outputting the control commands to the given channel of the digital video signal amplitude corrector 13, in which the input is connected to the address bus of PC 6;
an input register 61 (RG) for receiving the control commands coming from PC 6, for which:

- the first input is connected to the data bus of PC 6 and the second input is connected to the output of address decoder 60, while - the outputs are connected to the control inputs (r/w) of non-volatile RAMs 56 and 57

an output multiplier 62 for generating the codes for the normalised video output $U_{cu}(x,y)$ by multiplication of the afore-mentioned normalised factors times the code for the difference signal.

As previously stated, in the case of this preferred realisation of digital video signal amplitude corrector 13, besides what has been indicated, the above-mentioned functional modules have the following external connections and interconnections:

RAM 56 (NRAM1) is connected:

- through the data input to the output of the corresponding channel of the above-mentioned ADC module 2,
- through the control input (r/w) to the first output of input register 61 (RG),

RAM 57 (NRAM2) is connected:

- through the data input to the output of said differential stage 58,
- through the control input (r/w) to the second output of input register 61 (RG), while

through the address inputs, both RAMs 56 and 57 (NRAM 1 and 2) are connected to the X,Y output of the above-mentioned synchroniser 7;
differential stage 58 is connected:

- through the first input to the output of the corresponding channel of the above-mentioned ADC module 2,
- through the second input to the output of said RAM 56 (NRAM1),
- through the output to the first input of said multiplier 62;

divider 59 is connected between the output of RAM 57 (NRAM2) and the second input of multiplier 62.

It is clear to specialists that, in principle, we can manage with one non-volatile RAM (NRAM) with insignificant losses in the quality of the amplitude correction.
Each interframe accumulator 14 (see fig. 7) has:.

two multipliers 63 and 64, which respectively are designed for multiplying the code $U_{in}(x,y)$ for each active pixel of the image input times the weighting factor $A_k$, and multiplying the code $U_i(x,y)$ for each pixel of the accumulated image times the weighting factor $B_k$; and the first input of multiplier 63 is connected to the output of the corresponding channel of the above-mentioned ADC module 2;

an adder 65 for calculating the weighted sum of the codes for each active pixel of the image input and the corresponding pixel of the accumulated image, in which the first and second inputs are connected respectively to the outputs of multipliers 63 and 64;

a RAM module 66 for storing the codes $U_i(x,y)$ of the pixels of the accumulated image, in which:

- the first input is connected to the output of adder 65,
- the second input is connected to the synchronising outputs of the above-mentioned synchroniser 7 with the codes of the X,Y co-ordinates,
- the third input is connected to the control output $U_c$ of the above-mentioned synchroniser 7, while
- the data output $U_i(x,y)$ is the output of the interframe accumulator and is connected:
- to the input of the corresponding channel of the above-mentioned digital video signal amplitude corrector 13 (see fig. 6), and
- to the first input of multiplier 64;

an address decoder 67 (DC) for the programmable port of PC 6 for outputting to the interframe accumulator 14 the codes for the weighting coefficients $A_k$ and $B_k$, in which the input is connected to the address bus of PC 6;

an input register 68 (RG) for receiving the codes of the weighting factors $A_k$ and $B_k$, sent from PC 6, in which the first input is connected to the data bus of PC 6 while the second input (C) is connected to the output of address decoder 67, the first output is connected to the second input of multiplier 63, while the second output is connected to the second input of multiplier 64.

The interframe accumulators can be easily selected by specialists from a wide variety of commercially available products of this type.

Multichannel threshold controller 15 as a whole is designed for controlling:

(directly) source 12 of primary x-radiation according to the criteria of permissible absorbed dose and the required quality of the synthesized integral image, mainly for mass roentgenographic examinations, and
(through the above-mentioned synchroniser 7) interframe accumulators 14.

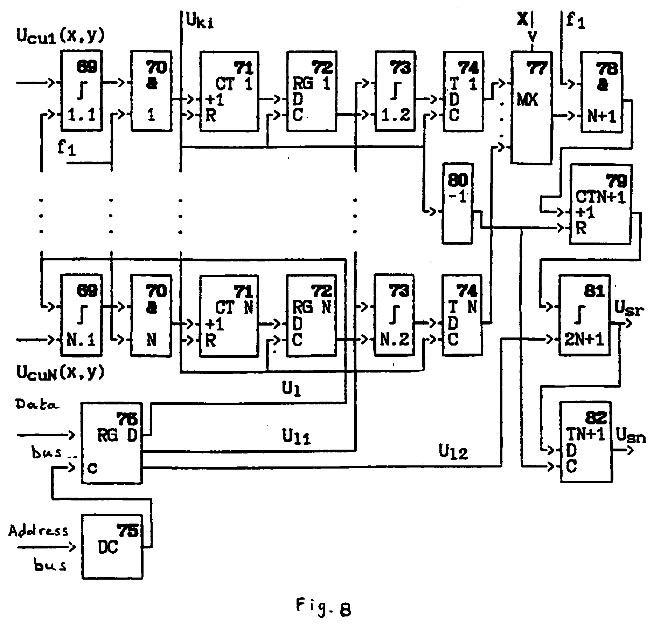

It is a set of channels with isolated inputs, the number of channels being equal to the number of video cameras 1, and in each channel (see fig. 8) there are:

a first comparator 69 for comparing the codes for the pixels of the image formed by the video camera 1 corresponding to the given channel with the threshold code $U_l$;
an AND (&) circuit 70, which is connected to the output of comparator 69 through the first input and is designed for strobing the clock signal fl with the output signal of this comparator;
a counter 71, the count input (+l) of which is connected to the output of the AND (&) circuit 70 and which serves for counting the number of such pixels in the image frame corresponding to the video camera 1 connected to the given channel, the codes of which exceed the threshold $U_l$;
a register 72 (RG), the data input (D) of which is connected to the output of counter 71 and which serves for storing the parallel output code of this counter;
a second comparator 73, which is connected to the output of counter 71 through register 72 and serves for comparison of the output code of this counter 71 with the threshold $U_{ll}$;
a trigger 74, in which the D-input is connected with the output of comparator 73 and which serves for writing the logical output signal of this comparator at the end of the synchronising frame pulse $U_{ki}$ from the above-mentioned synchroniser 7.

Furthermore, for all the channels of the multichannel threshold controller 15, the following general functional modules are provided, also shown in fig. 8:

an address decoder 75 (DC) for the programmable port of PC 6 for outputting to multichannel threshold controller 15 the threshold codes $U_l$, $U_{l1}$, and $U_{l2}$, in which the input is connected to the address bus of PC 6;
an input register 75 (RG_D) for receiving the codes for the thresholds $U_l$, $U_{l1}$, and $U_{l2}$, sent from PC 6, in which:

- the first input is connected to the data bus of PC 6, while

- the second input (C) is connected to the output of address decoder 75,
- the first output is connected to the combined first inputs of the above-mentioned comparators 69 for all the channels, while
- the second output is connected to the combined second inputs of the above-mentioned comparators 73 for all the channels;

a multiplexer 77 (MX) for multiplexing the output signals of all the channels, in which:

- each data input is connected to the outputs of triggers 74 of the corresponding channels, while
- the control input is connected to the synchronising output of the above-mentioned synchroniser 7 with the code for the X co-ordinate;

an AND (&) circuit 78 for strobing the clock signal fl with the output signal of multiplexer 77, in which:

- the first input is connected to the output of multiplexer 77,
- the second input is connected to the combined second inputs of the AND (&) circuits 70 of each of the channels of the multichannel threshold controller 15 and is connected to the output of driving generator 40 of the synchronising ("TV sync") signals (see fig. 5), i.e., to the clock output of the above-mentioned synchroniser 7;

a counter 79 for counting the number of channels for which the signals at the outputs of triggers 74 have logic level "1", and which is connected:

- through the count input (+I) to the output of AND (&) circuit 78, while
- through the reset input (R) to the synchronising output $U_{ki}$ Of the above-mentioned synchroniser 7 through inverter 80;

a comparator 81, designed for comparing the output code of counter 79 with the threshold $U_{l2}$ and connected:

- through the first input to the output of counter 79,
- through the second input to the third output of the above-mentioned input register 75 (RG_D), and
- through the output to the not specifically shown controller of source 12 of primary (x-ray) radiation (see fig. 2);

a trigger 82 for recording and storing the output signal of comparator 81, connected

- through the D input to the output of this comparator 81,
- through the clock input (C) across said inverter 80 to the synchronising output $U_{ki}$ of the above-mentioned synchroniser 7 (see fig. 5), and
- through the output $U_{sn}$ to the D input of trigger 52 of the above-mentioned synchroniser 7.

Furthermore, in each channel the following inputs are combined and jointly connected to the synchronising output $U_{ki}$ Of the above-mentioned synchroniser 7:

the reset input (R) of each counter 71,
the clock input (C) of each register 72, and
the clock input (C) of each trigger 74;

And, finally, the second inputs of comparators 69 of all the channels of the multichannel threshold controller 15 are connected to the corresponding data outputs $U_{cul}(x,y)$ ... $U_{cuN}(x,y)$ of the above-mentioned digital video signal amplitude corrector 13.

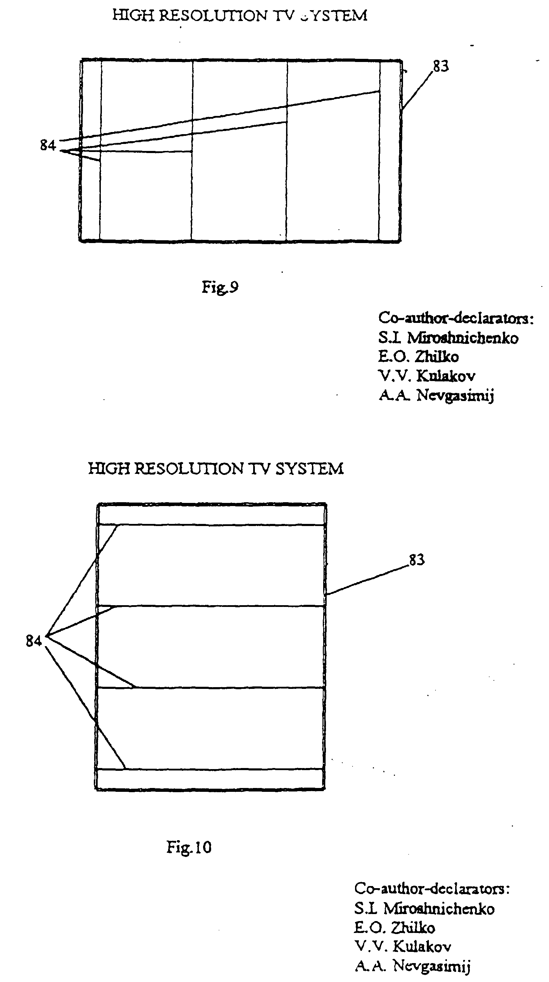

The test objects 10 with vertical (see fig. 9) and horizontal (see fig. 10) positioning of the three-dimensional targets are similar in construction and contain a rigid rectangular board 83 made of x-ray transparent material, such as ordinary glass or Plexiglass, and thin cords (filaments) 84 made of x-ray opaque material such as steel are embedded in the board or stretched over it. A rigid frame can be used instead of the board.

The format of board (or frame) 83 corresponds to the format of the total field of view, while its dimensions are greater than the dimensions of the total field of view of all the video cameras 1.

The cords 84 are positioned beforehand so that the field of view of each of the video cameras 1 is approximately delimited during adjustment, while after adjustment it is clearly delimited by two adjacent cords respectively along the horizontal for the first test object 10 and along the vertical for the second test object 10. In this case, each internal cord 84 (not on an edge) simultaneously delimits the field of view of two adjacent video cameras 1 due to partial (up to 5%) overlap of their fields of view.

In particular, one of the test objects has $N_x+1$ vertical cords 84 while the second test object has $N_y+1$ horizontal (in the operating position) cords 84, where $N_x$ and $N_y$ are respectively the number of video cameras 1 positioned along the horizontal and the vertical in the form of a three-dimensional grid. In this case, the product $N_x * N_y = N$, i.e., the total number of video cameras 1.

In figs. 9 and 10, as an example we show diagrams for calibration test objects 10 for cases when $N_x = 3$ and $N_y = 3$, and N=9.

Independently of the specific realisation of the inventive conception, use of the proposed high-resolution television system involves the following:

preparation for operation, by at least adjusting geometric distortion corrector 3 to yield certain correction factors, and
operation proper, providing for the formation from the fragmentary video input signals of video cameras 1 a video output signal, corresponding to the integral image and, as needed, digital recording of the video output signal for subsequent analysis.

Preparation for operation begins with mounting video cameras 1 on an arbitrary rigid support so that their fields of view partially overlap, while their aggregate field of view overlaps the area of image converter 9.

In the simplest case, when the composition and structure of the proposed television system corresponds mainly to fig. 1 and when modules 10, 11, and 12 are not included in it, geometric distortion corrector 3 should be adjusted beforehand by the operator.

In order to do this, all the video cameras 1 should be examined on a test bench (which is a trivial matter for specialists to assemble) and the geometric distortions intrinsic to each of them should be quantitatively determined.

Based on the data obtained, using a familiar algorithm (such as the algorithm for minimisation of the mean-square deviation of an observed image from the required image), taking into account information on the relative arrangement of video cameras 1 within a single unit, the distance to the observed object and, as needed, such factors as the average luminance of the observed object, the correction factors should be calculated for elimination of geometric distortions and correction of the video output signal.

The correction factors obtained then should be written to the non-volatile memory of geometric distortion corrector 3, which makes it possible to proceed from adjustment to use of the proposed television system specifically under the conditions for which the video cameras 1 were examined and the correction factors were calculated.

The essence of the correction of geometric distortions and the meaning of the calculations will become clearer from a detailed description of the algorithm for automatic adjustment in a more complicated but preferable case, when the proposed television system corresponds to fig. 2 and is used mainly as an x-ray television system for real-time monitoring of physiological (mainly fast) processes.

In this case, preparation for operation involves automatic adjustment of geometric distortion corrector 3 and preferably digital video signal amplitude corrector 13.

Automatic adjustment of corrector 3 begins with sequential positioning of x-ray contrast vertical and horizontal calibration test objects 10 between image converter 9 and source 12 of primary x-radiation according to the command of PC 6, sent through synchroniser 7 to device 11.

Synchronously operating video cameras 1 read the image formed by converter 9 over its entire area with partial mutual overlap of the fields of view of the individual video cameras 1.

Shadows from cords 84 of test objects 10 (see figs. 9 and 10) in the field of view of each video camera 1 have the form of fine (usually two) lines: respectively vertical for each video camera 1 in each horizontal row, and horizontal for each video camera 1 in each vertical row. The distances between lines are determined respectively by the expressions:

$$L_l - L/N_x \tag{1}$$

where

L is the horizontal dimension of the total image field;
$L_l$ is the horizontal distance between lines
$N_x$ is the number of video cameras 1 in a horizontal row, and

$$H_l - H/N_y, \tag{2}$$

where

H is the vertical dimension of the total image field;

$H_l$ is the vertical distance between lines

$N_y$ is the number of video cameras 1 in a vertical row.

The lines of each test object 10 partition the image field into rectangles, to each of which corresponds the field of view of one of the video cameras 1. The optical systems of video cameras 1 are aligned consecutively and video cameras 1 are fixed so that in the field of view of each of them when observing the first test object 10, the vertical lines are located close to the left and right boundaries, while the horizontal lines are located close to the upper and lower boundaries of the field of view.

The video signal of each video camera 1 in corrector 3 is sent to the two comparators 18 corresponding to it (see fig. 3), which compare the code of said video signal with the fixed threshold code $U_t$ and detect respectively the vertical and horizontal lines (the boundaries of the raster) on the images of test objects 10. In this case, the first decoder 19 delimits the detection zone for the initial and final lines on the images of test objects 10 with respect to the X co-ordinate, and the second decoder 19 does the same with respect to the Y co-ordinate.

When comparator 18 detects a line (a shadow from cord 84) in a specified zone, the control signal $U_{str}$ generated by the synchroniser 7 through the corresponding AND (&) circuit 20 is sent to the control input (r/w) of non-volatile RAMs (NRAM) 21. In this case, the first and second NRAM 21 respectively fix the initial $L_b(y)$ and the final $L_e(y)$ abscissas of the boundary of the raster with respect to the first test object 10, while the third and fourth NRAM 21 fix the initial $H_b(x)$ and the final $H_e(x)$ ordinates of the boundary of the raster with respect to the second test object 10.

To do this, synchroniser 7 sends the code for the Y co-ordinates to the address inputs of the first and second NRAM 21 and, on the other hand, sends the code for the X co-ordinate to the data inputs of the first and second NRAM 21, while it sends the code for the X co-ordinate to the address inputs of the third and fourth NRAM 21 and, on the other hand, sends the code for the Y co-ordinate to the data inputs of the third and fourth NRAM 21.

After said values $L_b(y)$, $L_e(y)$, $H_b(x)$, and $H_e(x)$ have been recorded, device 11 removes the last of the calibration test objects 10 from the field of view of video cameras 1, the control signal $U_{str}$ generated by synchroniser 7 switches all NRAM 21 to readout mode, and the automatic adjustment of corrector 3 is completed.

Said values of $L_b(y)$ and $L_e(y)$ then serve for correction of a fragment of the image output by calculating the $X_c$ co-ordinates of the pixels along the horizontal, and the values of $H_b(x)$ and $H_e(x)$ serve for correction of a fragment of the image output by calculating the $Y_c$ co-ordinates of the pixels along the vertical.

The nature of the corrections, necessary in any possible operating modes of the proposed television system, is reduced to carrying out the following operations.

The codes for the $X_c$ and $Y_c$ coordinates of the pixels of the corrected image are calculated by differential stages 22, tabular normalizers 23, multipliers 24, and adders 25 of the first and second above-mentioned calculation circuits 16, respectively, according to the following algorithm:

$$X_c(y) - X(y)*(L_e(y)- L_b(y))/L_O + L_b(y), \qquad (3)$$

$$Y_c(x) - Y(x)*(H_e(x)- H_b(x))/H_O + HL_b(y), \qquad (4)$$

where $L_O$ and $H_O$ are respectively the undistorted horizontal and vertical dimensions of the image for each video camera 1.

The codes of the pixels for the corrected image $U_{ic}(x,y)$ are read out from RAM 27 of one of the two slave memory modules 17 in accordance with the calculated co-ordinates $X_c$ and $Y_c$.

Simultaneously with readout, the codes for the pixels of the original image $U_i(x,y)$ are written to RAM 27 of the second slave memory module 17 at the addresses X and Y, sent from synchroniser 7.

The addresses for writing to and reading from RAM 27 of the first and second slave memory modules 17 are generated by multiplexers 26.

Multiplexers 26 and RAM 27 of the first slave memory module 17 are controlled by the signal $U_{rw}$ of synchroniser 7, while multiplexers 26 and RAM 27 of the second slave memory module 17 are controlled by the inverted signal $U_{rw}$ from the outputs of inverters 28.

In this case, the first and second slave memory modules 17 operate in opposite phase: when the first modules are reading the codes for pixels of the corrected image from the $X_c$ and $Y_c$ addresses, the second modules are writing the codes for pixels of the original image to the X and Y addresses, and vice versa. Alternation of the "read-write" cycles occurs at a frequency equal to the frame rate of video cameras 1.

Output multiplexer 29 multiplexes signals from the outputs of RAM 27 of the first and second slave memory modules 17 in accordance with the logic level (0 or 1) of the signal $U_{rw}$ from synchroniser 7.

As has already been noted, after adjustment of all the channels of geometric distortion corrector 3, it is advisable to adjust the digital video signal amplitude corrector 13 (see fig. 6) immediately.

When such adjustment begins, source 12 of primary (x-ray) radiation is turned off. ADC module 2 for each of the video cameras 1 generates the codes for the readouts $(min)U_i(x,y)$, corresponding to the "black" level of the video output signal.

In each channel of said corrector 13, according to the control commands from PC 6 sent through input register 61 (RG), for each pixel of the fragmentary image said codes are written to non-volatile RAM (NRAM) 56 in accordance with the X and Y addresses which are generated by synchroniser 7. Accordingly, in all channels of corrector 13 provision is made for writing such codes for the entire image field. After writing, the non-volatile RAMs (NRAM) 56 in all channels of corrector 13 are switched to read mode according to the command of PC 6.

Then said codes will be directly used as correction factors $U_b(x,y)$, determining the "black" level in correction of fragments of the integral video output signal.

Analogously, after connecting source 12 of primary (x-ray) radiation, ADC module 2 for each of the video cameras 1 generates codes for the readouts $(max)U_b(x,y)$, corresponding to the maximum excursion of the video output signal. Then in each channel of said corrector 13, according to the control commands from PC 6 sent through the same input register 61 (RG), the following occur for each pixel of the fragmentary image:

in differential stage 58: subtraction
$(max)U_i(x,y) - [(min)U_i(x,y) - U_b(x,y)]$ , while
in non-volatile RAM (NRAM) 57, the difference between said codes is recorded in accordance with the addresses X and Y, which are generated by synchroniser 7. Accordingly, in all channels of corrector 13, provision is made for writing such codes for the entire image field.

The differences obtained then will be used during correction as the correction factors $U_w(x,y)$, determining the maximum excursion of the fragments of the integral video output signal.

After these factors have been written to RAM 57 of all channels, these RAMs (NRAM) according to commands from PC 6 are switched to read mode, and adjustment of digital video signal amplitude corrector 13 is completed.

The essence of the amplitude correction, which is necessary when using the proposed television system for x-ray diagnostics of parts of the human body which have different x-ray transmission coefficients, and especially when using automatic control of, the irradiation dose (and in the remaining cases, it is simply desirable) principally involves the following.

In each channel of video signal amplitude corrector 13, for each point with co-ordinates (x,y) of the images formed by each video camera 1, the following operations should be performed as specified by the expression:

$$Y_{XY}(\xi,\psi) - Y_{\iota}(\xi,\psi) - Y_{\beta}(\xi,\psi)) * Y_{\mu\alpha\xi} / (Y_{\omega}(\xi,\psi) - Y_{\beta}(\xi,\psi)), \qquad (5)$$

where $U_{cu}(x,y)$ is the corrected video signal at the output of corrector 13;
$U_i(x,y)$ is the code for the video signal at the input of corrector 13;
$U_{max}$ is the code for the maximum excursion of the video signal for the synthesized integral image;
$U_b(x,y)$ and $U_w(x,y)$ are the codes for the correction factors, the physical meaning of which and methods for obtaining which are given above.

Subtraction from the code for the video input signal $U_i(x,y)$ of the corresponding code for the "black" level (as the correction factor $U_b(x,y)$, read from non-volatile RAM (NRAM) 56), is done in differential stage 58. Performing this operation with the video output signals of all the video cameras 1 makes it possible to set a single value for the code for the "black" level for the video signal of the synthesized integral image.

The result of integer division of the code for the maximum excursion of the video signal for the synthesized integral image by the code for the maximum excursion of the fragmentary video signal (the correction factor $U_w(x,y)$, read from non-volatile RAM (NRAM) 57), is sent to multiplier 62 from the output of divider 59. Thus divider 59 and multiplier 62 reduce the fragmentary video signal to a common scale, corresponding to the synthesized integral video signal.

In operating mode, the proposed high-resolution television system can function as follows.

In the simplest case, such as when forming high-resolution television images of the Earth's surface based on cartographic images on photographic film obtained by aerial or space photography, the original image is directly projected onto the optical systems of video cameras 1.

ADC module 2 converts the video output signals of video cameras 1, corresponding to the fragmentary images, to digital form in the familiar way and supplies them to the inputs of geometric distortion corrector 3.

This corrector 3, as was described above, eliminates those distortions of the video signals of the fragmentary images which hinder their "stitching" into an integral image without visible boundaries between fragments.

Synthesis of the high-resolution integral image occurs in video standards converter 4 with RAM (see fig. 4), to which the corrected fragmentary video signals are sent from corrector 3 through the combined data inputs (DI) of all frame buffers 31 of the independent RAM banks.

Formation of the high-resolution integral image begins with parallel writing of said video signals to the first frame buffers 31 at the X and Y addresses, supplied from the above-mentioned synchroniser 7 through the very first address multiplexers 30. To do this, control decoder 32 for the RAM banks generates control signals and sends them to each of the first RAMs 31 through the first multiplexers 30 corresponding to them. According to these signals at the (r/w) inputs, the first RAMs 31 switch to write mode, while the signals at the (CS) inputs maintain the outputs (DO) of the same RAMs 31 in a high impedance (Z) state. Thus each first frame buffer 31 records the first active frame of the corrected television image of the corresponding video camera 1.

The next active frame of such an image analogously will be written to the second frame buffer 31 of all the independent RAM banks, with the distinctions that the signals of the X and Y addresses from the above-mentioned synchroniser 7 and the above-mentioned other control signals from decoder 32 will be supplied through the second address multiplexers.

In the same time period, the first frame buffers 31 of all the independent RAM banks will operate in sequential read mode for readout of the lines of the fragmentary corrected video signals of the preceding frame in accordance with the addresses $X_m$ and $Y_m$, supplied from synchroniser 7 through the first address multiplexers 30. In this case, the outputs (DO) of the first frame buffers 31 are sequentially switched to the active state by the control signals, which are supplied to the inputs (CS) from the above-mentioned decoder 32 through the corresponding first multiplexers 30.

Sequential readout is executed as follows:

when the first line of the frame of the above-mentioned video cameras 1 begins to be written to the second frame buffers 31, simultaneously the outputs (DO) are switched to the active state in the first frame buffer 31 of the RAM bank which corresponds to the video camera 1 located in the first column and the first row, and the first line of the preceding frame written in it is read out;

then the outputs (DO) of said first frame buffer 31 are switched to the high-impedance state, and the outputs are switched to the active state in the first frame buffer 31 of the next RAM bank, which corresponds to video camera 1, located in the second column and the first row, and the first line of the preceding frame written to it is read out; said operations are repeated until the first lines of the preceding frame are read out from the first frame buffers 31 of all the RAM banks corresponding to video cameras 1 which are located in the first row,

again the outputs (DO) are switched to the active state in the first frame buffer 31 of the RAM bank, which corresponds to the video camera 1 located in the first column and the first row, and the second line of the preceding frame is read out;

during parallel writing of the first line of the active frame to the second frame buffers 31 of all the RAM banks, the number of lines $N_y$ (which is equal to the number of rows of video cameras 1) are read out from the first frame buffers 31 of those RAM banks which correspond to video cameras 1 located in the first row;

when writing of the second line of the active frame to the second frame buffers 31 begins, switching of the outputs (DO) of the first frame buffers 31 to the active state and readout of the lines of the preceding frame occur analogously, but starting from the $(N_{y+I})$-th line;

after readout from the first frame buffers 31 of the RAM banks corresponding to video cameras 1 located in the first row is finished, the lines of the preceding frame are analogously read from the RAM banks which correspond to the second row of video cameras 1, and so forth.

Then parallel writing of the third and subsequent active frames and sequential readout of the second and subsequent active frames of the corrected television images of the corresponding video cameras 1 are repeated many times, with alternation of the participating first and second frame buffers 31 of all the independent RAM banks.

Then digital-to-analog converter 33 (DAC HRV) converts the digital code corresponding to the high-resolution integral image, supplied from the outputs DO of frame buffers 31, to the analog video signal $U_{out}$.

Simultaneously with writing to frame buffers 31, buffer RAM modules 34 (RAM$\underline{1}$ ... RAM$\underline{N}$, according to the signal $U_w$ of one logic level supplied from PC 6 through synchroniser 7, write in parallel the corrected fragmentary video signals of video cameras 1 for their subsequent input into PC 6. In this case, the outputs (DO) of memory modules 34 are found in the high-impedance state in accordance with the control signals from the outputs of buffer RAM decoder 35 (DC CS). When the high-resolution image written to the buffer RAM is inputted, on the other hand, into PC 6, modules 34 are switched to read mode by the command $U_w$ of the other logic level, and the control signals from the outputs of decoder 35 alternately switch the outputs (DO) of these modules 34 to the active state.

The video output signal of video standards converter 4 with RAM is sent through module 5 to PC 6 for documentation, archiving, or displaying on its own monitor (for inspection) and/or on the high-resolution monitor 8 (for online inspection or preliminary visual assessment).

For the described application of the proposed television system, the system control functions are successfully managed by PC 6 and synchroniser 7, in which (see fig. 5):

a) selector 37 extracts the original sync pulses from the total television Input signal $U_{in1}$ and on the basis of these pulses generates:

output line HSI and half-frame VSI synchronising pulses, used then in the digital-to-analog converter 36 of the above-mentioned video standards converter 4 with RAM to generate the total television signal, sent to module 5 for inputting to PC 6;

b) frame (sync) pulse selector 38 and flip-flop 39 generate the control signal $U_{rw}$ for address multiplexers 30 of the above-mentioned video standards converter 4 with RAM for generation in this converter (see fig. 4):

read and write addresses,
control signals for the operating modes of frame buffers 31, including chip select commands (CS) and read/write (r/w) commands, and
control signals for input multiplexers 26 and read/write modes of RAM 27 in slave memory modules 17 of the above-mentioned geometric distortion corrector 3;

c) TV sync generator 40 generates the clock signal f which is sent:

to the above-mentioned ADC module 2 for setting the timing of the "analog-to-code" conversions in the analog-to-digital converters included in this module and
to the count input of counter 41 for generation of the codes for the abscissas X of the pixels of images in video cameras 1;

d) counter 42, according to the signals of the line HSI synchronising pulses of sync pulse selector 37, generates the codes for the ordinates Y of the pixels of images of video cameras 1;

(then said codes for the co-ordinates X and Y are sent:

- to the data inputs of address multiplexers 30 as addresses for writing to frame buffers 31 in the operating mode,
- to the address inputs of memory modules 34 of the converter 4 upon input of the video signal of the synthesized image to the PC 6 through input module 5 and
- to the geometric distortion corrector 3, including:

-- to calculation circuits 16, to the data inputs of decoders 19 for generation of control signals for the read/write modes of the non-volatile RAMs 21 (NRAM) and to the address inputs of these RAMs 21 for readout of the values of $L_b(y)$, $L_e(y)$, $H_b(x)$, and $H_e(x)$ recorded during adjustment, which are needed in calculating the codes for the corrected co-ordinates $X_c$ and $Y_c$ in the operating mode, and
-- to slave memory modules 17, to the inputs of multiplexers 26 for generation of the addresses for writing the codes of the video signals of video cameras 1 in the operating mode);

e) counter 44, according to the signals from sync-HRV generator 43 generates the codes for:

- the abscissas $X_m$ for the pixels of the synthesized image and
- the control signal $U_{dc}$, sent to decoder 32 for controlling the RAM banks of the above-mentioned video standards converter 4 with RAM, for selection of the RAM bank when reading out the previously written codes for the pixels of images of video cameras 1 in formation of a high-resolution integral image in the operating mode;

f) comparator 45 HHSI and monostable monovibrator 46 HHSI generate line (HHSI) sync pulses for the video signal of the synthesized image;

g) counter 47, according to the line (HHSI) sync pulse signals from the output of the above-mentioned monostable multivibrator 46, generates the codes for the ordinates $Y_m$ for the pixels of the synthesized image, which together with the codes for the abscissas $X_m$ for the pixels of this image are sent to the data inputs of address multiplexers 30 of the above-mentioned video standards converter 4 with RAM as the addresses for readout from frame buffers 31 in the operating mode in formation of the synthesized integral image on the monitor 8;

h) comparator 48 HVSI and monostable multivibrator 49 HVSI generate the frame (HVSI) sync pulses for the video signal of the synthesized image, which together with the above-mentioned line (HHSI) sync pulses from the output of the monostable multivibrator 46 are sent to digital-to-analog converter 33 of the video standards converter 4 with RAM for formation in the operating mode of the total television video signal $U_{out}$ of the synthesized high-resolution integral image;

i) counter 50, according to signals from the frame (HVSI) sync pulses, generates the control signal $U_{dcc}$, sent to decoder 35 of the buffer RAM for selection of the memory module 34 which is active at the given time for input of the video signal of the synthesized integral image to the above-mentioned PC 6;

j) input register 53, according to the synchronising signal of address decoder 55 (DC A) for the programmable port of PC 6, receives commands from this PC and on the basis of these commands generates:

the control signal $U_w$, enabling input of the video signal of the synthesized high-resolution integral image to PC 6, that is sent to the above-mentioned video standards converter 4 with RAM,
the control signal $U_{clb}$ for triggering the adjustment mode, that is sent:

- to the above-mentioned device 11 to start positioning the calibration test objects 10 in the field of view of video cameras 1 (during automatic adjustment of the television system), and
- to AND circuit 51, which based on this signal generates the control signal $U_{str}$, sent to geometric distortion corrector 3 for switching non-volatile RAMs 21 (NRAM) to write mode for writing the codes for the co-ordinates of the boundaries of the test images (during automatic adjustment of the television system);

k) output register 54 sends to the above-mentioned PC 6 a frame (sync) pulse signal, generated by frame pulse selector 38, and the control signal $U_{dcc}$ from the output of the counter 50.

The functioning of the other modules of synchroniser 7 will be described below as applied to other possible operating modes of the proposed television system, mainly for the needs of x-ray diagnostics, when it is advisable to use interframe accumulators 14 and multichannel threshold controller 15 in order to increase the quality of the integral images.

One such mode is motivated, for example, by the requirement for automatic adjustment of said system for roentgenoscopic monitoring of surgical operations using probes. In fact, in preparing the (x-ray) television system for such operations, often it is necessary to change the relative disposition of video cameras 1 taking into account the required configuration and the area of the operative field.

Just as the effectiveness of such operations is particularly dependant on the accuracy with which the position of the probe in the body of the patient is positioned, so the quality of the geometric correction of the integral image displayed on monitor 8 (i.e., lack of visible seams between its fragments) becomes especially significant.

Accordingly, the effectiveness of the operation of geometric distortion corrector 3 depends considerably on the accuracy with which the correction factors $U_b(x,y)$ and $U_w(x,y)$ are determined in digital video signal amplitude corrector 13.

However, we know that even when x-ray source 12 is turned off, the video signals $U_{in}(x,y,t)$ after ADC module 2 are represented by the sum:

$$U_{in}(x,y,t) = U_b(x,y) + U_n(x,y,t), \qquad (6)$$

where

$U_b(x,y)$ is the constant component of the "black" levels (which for different pixels of the image from one of the video cameras 1 and even for different video cameras 1 may have insignificantly different values), and $U_n(x,y,t)$ is the fluctuating component, due to noise in said radiation source 12, converter 9, and video cameras 1.

When said source 12 is turned on (during adjustment or when the television system is "idling"), the signal $U_{in}(x,y,t)$ will be determined by the expression:

$$U_{in}(x,y,t) = U_w(x,y) + U_b(x,y) + U_n(x,y,t), \qquad (7)$$

where

$U_w(x,y)$ is a quantity, essentially constant for a specific video camera, corresponding to the maximum excursion and defined as the product $Kw(x,y)^*U_{max}$, where $U_{max}$ is a signal corresponding to the maximum luminance of the image, while $Kw(x,y)$ is the attenuation coefficient (typically less than unity), which is due to the slight nonuniformity in the magnitude of the flux from said source 12, the nonuniformity of converter 9 and the transmission coefficients of the optical systems of video cameras 1, and which is automatically determined and taken into account when the proposed television is started up;

$U_b(x,y)$ and $U_n(x,y,t)$ are the same as in (6).

Using mathematical modelling well known to specialists and/or experimentally, it is not difficult to determine beforehand such averaging coefficients $A_k$ and $B_k = 1-A_k$ respectively for the input $U_i(x,y)$ and output $U_i(x,y)$ signals of interframe accumulators 14; when they are used, the effect of said fluctuating components on the quality of the $U_i(x,y)$ signals at the input to video signal amplitude corrector 13 (and later, at the input to geometric distortion corrector 3) will be substantially attenuated.

The codes for the said coefficients are fixed in the memory of the above-mentioned PC 6. During automatic adjustment or when using the proposed television system in most operating modes, these codes for the coefficients $A_k$ and $B_k$, according to the control signal from the output of address decoder 67 for the programmable port of PC 6, are sent for writing to input registers 68 of each of the interframe accumulators 14.

Then in the not specially designated recirculator loops of interframe accumulators 14, each of which is assembled on the basis of two multipliers 63 and 64, adder 65, and RAM module 66 (see fig. 7), the input signals $U_{in}(x,y)$, coming from the corresponding outputs of the ADC module 2, are multiplied by the coefficient $A_k$ and are added to the input signals $U_i(x,y)$ of digital video signal amplitude corrector 13 which have been multiplied by the coefficient $B_k$, which improves the quality of the synthesized high-resolution images.

In order to control interframe accumulators 14 during adjustment of the proposed video system and especially in the roentgenography operating mode, it is advisable to use multichannel threshold controller 15 (see fig. 5).

In fact, each roentgenogram, written to PC 6 in the form of a high-resolution digital video signal, should on reconstruction provide an image quality which will be close to the quality of the images on wide-format x-ray film. At the same time, it is desirable that this quality be achievable in a time no greater than the typical exposure time for roentgenographic procedures.

Of course, minimisation of the exposure time (and the ionising radiation dose absorbed by the patient) cannot always be achieved by just choosing video cameras 1 with suitable sensitivity. Therefore it is desirable, after sufficient averaging of the video signals in interframe accumulators 14, to quickly "freeze" the satisfactory fragments of the integral video output, to record them, and to turn off x-ray source 12.

In order to do this, three thresholds are established beforehand (before the first roentgenography session):

the minimal luminance threshold of the fragmentary video signals, which is chosen as a fraction (preferably at least one fourth, but no greater than one-half) of the maximum excursion of the video signals of video cameras 1 used within the television system, and to which the parallel code $U_1$ corresponds;

the threshold $U_{l1}$ as the maximum permissible number of pixels in each fragmentary image with luminance less than the specified code $U_l$ (it is usually selected within the range 20-35% of the total number of pixels in said image), and

the threshold $U_{l2}$, specifying (usually within the range 15-35%) the number of channels M, out of the total number of channels N, in which the number of pixels with luminance less than the specified code $U_l$ is less than the threshold number of pixels $U_{l1}$.

These thresholds are then used as follows.

When the fragmentary video signals $U_{cu1}(x,y) ... U_{cuN}(x,y)$, corrected in digital amplitude corrector 13, are sent to the first inputs of comparators 69 of the corresponding channels of multichannel threshold controller 15, then the parallel code of the threshold $U_l$ is sent to the second inputs of' all these comparators 69 from the above-mentioned PC 6 through input register 76 (RG D).

Then in each channel:

the signals at the outputs of comparator 69 and the output of the AND circuit 70 take on the logic level "1" when the following condition is satisfied:

$$U_{cui}(x,y) < U_l \tag{8}$$

counter 71 counts the number of pixels of the fragmentary image, for which expression (8) is valid, and accordingly the luminance of which is less than said threshold value,

the sequence of pulses $U_{ki}$ at a frequency equal to the frame rate of the television scan and coming from the above-mentioned synchroniser 7, resets counter 71,

the pulses counted in the time required for one frame to "pass by" are written in parallel to register 72 at the end of the frame,

to the first and second inputs of comparator 73, respectively, are sent: the signal from counter 71 from said register 72, and the threshold code $U_{l1}$ of PC 6 from input register 76.

The logic "1" signal at the output of comparator 73 means that in this channel, the required exposure time is held to.

The logic signals from the outputs of comparators 73 of all the channels, through triggers 74, at the end of the frame of the fragmentary video signal are sent to the inputs of multiplexer 77, common to all the channels, to the control input of which is sent the X signal from the above-mentioned synchroniser 7.

Counter 79, at a frequency equal to the frame rate of the video cameras 1 , counts the number of channels in which the exposure is finished.

Comparator 81, to one of the inputs of which the threshold code $U_{l2}$ is sent through input register 76 from PC 6, generates a logic "1" signal when the exposure is finished in M channels out of N. The output signal $U_{sr}$ of comparator 81 is sent to the controller of the above-mentioned x-ray source 12 in order to turn it off.

At the end of a frame, the output signal of comparator 81 is rewritten to trigger 82 and is sent to the synchroniser 7, which generates a control signal for switching interframe accumulators 14 to memory mode and generation at their outputs of signals for the "frozen" fragmentary images, which are sent to PC 6 for storage and subsequent reconstruction and analysis of the high-resolution integral image.

For synchronisation of the operation of the modules for the proposed television system in its full configuration, synchroniser 7 (see fig. 5), along with the above-mentioned, receives and outputs a series of additional signals, synchronising the termination of accumulation of an integral number of frames of fragmentary video signals in interframe accumulators 14 with frame sync pulses, and specifically:

the D-input of D flip-flop 52 receives the control signal $U_{sn}$ from the output of the multichannel threshold controller 15,

a sequence of frame sync pulses from the output of frame pulse selector 38 in synchroniser 7 is sent to the clock C-input of the same D flip-flop 521

along the leading edge of each sync pulse of said sequence, this D flip-flop 52 is set to a logic level corresponding to the control signal $U_{sn}$, and is reset after each write operation (or on each triggering) according to the commands which come from PC 6 through input register 53 of synchroniser 7 to the R-input of this D flip-flop 52,

a signal from the inverted Q\ output of D flip-flop 52 is sent to the first input of AND circuit 51, and a signal $f_l$ from the output of the TV sync generator 40 is sent to its second input.

Thus the control signal $U_c$ is generated, which is a sequence of pulses with signal frequency fl and which provides accumulation of fragmentary video signals in interframe accumulators 14 (for low logic level of the signal $U_{sn}$) and acquisition of a "frozen" fragmentary image considerably freed of noise (for high logic level of the signal $U_{sn}$).

Commercial Applicability

The commercial applicability of the proposed high-resolution television system is determined first of all by the possibility of manufacturing it based on state-of-the-art elements in various configurations, and secondly, the possibility of application for the synthesis of integral (without visible seams) images with high-resolution from fragmentary video signals from an ordered set of standard video cameras, which makes it possible to use such a system for the needs of, for example, cartography, and in combination with an x-ray source for the needs of functional x-ray diagnostics, as has been demonstrated in detail above.

**Claims**

1.   A high-resolution television system having at least two video cameras, a module of analog-to-digital converters (ADCs), a video standards converter, internal memory (RAM), devices for synthesizing the video output signal connected to the outputs of the video cameras and interconnected, plus a central processor based on a PC, distinguished by the fact that the video output synthesizers are based on a multichannel geometric distortion corrector and a synchroniser; the corrector is connected through both the ADC module to the outputs of the video cameras and through the video standards converter and RAM to the input of the PC, while the synchroniser is connected through its control input to the synchronization output of at least one of the video cameras, and through its control outputs to the clock input of the ADC module, to the address inputs of said corrector and to the address and synchronising control inputs of the video standards converter.

2. A television system, according to claim 1,
distinguished by the fact that it is equipped with a primary (x-ray) radiation source and a converter of the X-ray image to a visible image which are mounted in series in front of the video cameras.

3. A television system, according to claim, 1,
distinguished by the fact that it is equipped with at least one calibration test object in the form of a three-dimensional target which may be placed in front of the video cameras during adjustment of the system.

4. A television system, according to claim 3,
distinguished by the fact that it is equipped with a device for placing the calibration test objects in the field of view and removing them from the field of view of the video cameras, connected to the synchronising control output of the synchroniser, while this synchroniser is additionally interconnected with the PC by a feedback control loop;

5. A television system, according to claim 1,
distinguished by the fact that it is equipped with a high-resolution monitor, which is connected to the data output of the video image standards converter and RAM.

6. A television system, according to claim 1,
distinguished by the fact that the multichannel geometric distortion corrector has, in each of the channels:

at the input:

- at least two identical calculation circuits for generating the corrected co-ordinates along the horizontal and the vertical, respectively, of each of the elements (pixels) of the image in the video output signal, computed on the basis of the initial co-ordinates of analogous pixels of the image in the input video signal and correction factors;
- at least two identical slave memory modules for the digital video input signal, connected to said calculation circuits as the sources of the addresses for readout of data on the corrected pixels of the video output signal, while

at the output:

- an inverter, which is inserted between the above-indicated synchroniser and one of said slave memory modules, and
- an output multiplexer for the alternate connection of the outputs of said slave memory modules to the input of the above-mentioned video standards converters and RAM.

7. A television system, according to claim 6,
distinguished by the fact that:

each of the said calculation circuits has at least:

- one input comparator with fixed threshold digital code, connected to the output of one of the ADCs,
- one decoder, connected to the address outputs for the pixel co-ordinates of the input image of the above-mentioned synchroniser, and having two control inputs,
- two AND logic circuits, each of which is connected to the output of said comparator and to the control output of the synchroniser, and one of which is connected to the first and the other to the second control output of said decoder,
- two non-volatile RAMs, in which:

-- the control inputs are independently connected to the outputs of the respective AND logic circuits and
-- address and data inputs are also independently connected respectively to the address inputs of the above-mentioned syhchroniser;

- one decoder, connected to the address output of one of the co-ordinates of each of the pixels of the input image from the synchroniser (in the process, the signal corresponding to one of the co-ordinates of each of the pixels of the input image is sent to the data inputs of the first and second non-volatile RAMs of the first calculation circuit; the signal corresponding to the second co-ordinate of each of the pixels of the input image arrives at the address inputs of the same RAMs, while said signals are sent in reverse order to the corresponding inputs of the first and second non-volatile RAMs and to the decoder of the second calculation circuit),
- one differential stage with two data inputs separately connected respectively to the data outputs of said non-volatile RAMS,
- a normalizer for integer division of the digital parallel code of the signal setting one co-ordinate of each pixel of the distorted image, by the digital code of a constant setting one of the geometric dimensions of the undistorted raster (respectively along the horizontal in one calculation circuit and along the vertical in the other calculation circuit).
- a multiplier for multiplication of the digital codes of one of the normalised co-ordinates of each of the pixels of the input image by the digital code of the active dimension of the distorted raster corresponding to this co-ordinate,
- an adder for adding the digital codes of the co-ordinates of the origin of the representation of the distorted raster and the current increment in the co-ordinate of the processed pixel of the image in the same raster, while

each slave memory module has:

- two input multiplexers, each of which is designed for generation of the corresponding digital codes of the co-ordinates of the pixels of the input and corrected image, and connected to said multiplexers
- RAM for writing the video input signal to one address and reading the video signal of the corrected image output from the other address.

8. A television system, according to claim 1, distinguished by the fact that the video standards converter is combined with said RAM and has:

RAM banks with isolated data inputs, the number of which is equal to the number of video cameras, and to each of which the following are connected:

- two address multiplexers and
- two frame buffers;

a memory bank control decoder;
a first digital-to-analog converter;
buffer RAM, containing:
memory modules connected in parallel, the number of which is
equal to the number of video cameras, and
a buffer RAM decoder and
a second digital-to-analog converter.

9. A television system, according to claim 8, distinguished
by the fact that:

(a) in each RAM bank:

the data inputs of the frame buffers are combined and connected to the corresponding outputs of said multichannel geometric distortion corrector, and their data outputs are also combined (including between banks) and connected to the data input of the first digital-to-analog converter;
the first inputs of the multiplexers are combined and connected to the synchronising outputs of the codes for the co-ordinates for writing the corrected images to the frame buffers in the above-mentioned syhchroniser, while the second inputs of the multiplexers are also combined and connected to the synchronising outputs of the codes for the co-ordinates for reading the corrected images from the frame buffers in the above-mentioned synchroniser;

the first outputs of the first multiplexer are connected to the corresponding address inputs of the first frame buffer, while the first outputs of the second multiplexer are connected to the corresponding address inputs of the second frame buffer;

the second control input of the first multiplexer and the second inverted control input of the second multiplexer are connected to the control output of the synchroniser;

the first outputs of the multiplexers are connected to the address inputs, their second outputs are connected to the chip-select control inputs, and their third outputs are connected to the read-write control inputs of the corresponding RAMS;

(b) in all RAM banks:

the first control inputs of the first and second multiplexers are combined and connected respectively to the first, second, etc. outputs of the decoder,

while the data outputs of all frame buffers are combined and connected to the data input of the first digital-to-analog converter;

(c) the control input of the decoder is connected to the control output of synchroniser;

(d) the first and second control inputs of the first digital-to-analog converter are connected respectively to the. synchronising outputs of the synchroniser, while the data output of this converter is connected to the above-mentioned high-resolution monitor;

(e) the address inputs of the buffer RAM modules are combined and connected to the synchronising outputs of the synchroniser with the codes of the co-ordinates; their data inputs are connected to the corresponding outputs of the multichannel geometric distortion corrector; their data outputs are combined and connected to the data input of the second digital-to-analog converter; their read-write control inputs are connected to the control output of the synchroniser, while the data input of the last said buffer RAM module is connected to the corresponding data input of the frame buffer;

(f) the control inputs of the buffer RAM decoder are connected to the corresponding control outputs of the synchroniser, while the control outputs of said decoder are connected to the chip-select inputs of the memory modules so that the first of said outputs are connected with said input of the first memory module, the second with the input of the second memory module, etc.;

(g) the data input of the second digital-to-analog converter is connected to the combined data outputs of the memory modules; the control inputs of this converter are connected to, respectively, the synchronising outputs of the said synchroniser, while its data output is connected to the above-mentioned module for inputting the video signals to the PC.

**10.** A television system, according to claim 1, distinguished by the fact that the synchroniser has:

a first driving generator of synchronising signals corresponding to the resolution standard of the video cameras, whose clock output is connected to the clock inputs of the ADC modules and of the multichannel threshold controller, and

at least one second driving generator of synchronising signals, corresponding to the high-resolution standard of the synthesized image;

two groups of counters respectively for the X and Y co-ordinates of the pixels of the images formed by each of the video cameras, and

two groups of counters respectively for the $X_m$ and $Y_m$ co-ordinates of the pixels of the synthesized high-resolution image;

at least one sync pulse selector to select the original synchronising pulses from the total television signal and to form output horizontal and vertical synchronising pulses;

two digital comparators respectively for the codes of the $X_m$ and $Y_m$ co-ordinates;

two monostable multivibrators for the formation of horizontal (line) and vertical (frame) pulses corresponding to the high- resolution standard;

at least one counter of the number of pixels of the synthesized high-resolution image;

an AND circuit for conjunction in the process of formation of control signals for the above-mentioned geometric distortion corrector;

an input register for receiving the control commands by said synchroniser, sent from said PC;

an output register for sending information about the state of said synchroniser to said PC, and

an address decoder for the programmable port of said PC for outputting the control commands to the synchroniser,

in which case:

the first driving generator is connected to the count input of the first group of X co-ordinate counters;

the count input of the second group of Y co-ordinate counters is connected to the output of the horizontal synchronising pulses of the sync pulse selector;

the first group of $X_m$ co-ordinate counters is connected through the count input to the output of the second driving generator of synchronising signals;

the count input of the second group of $Y_m$ co-ordinate counters is connected to the output of the $X_m$ co-ordinate counters through one of the digital comparators and one of the monostable multivibrators, connected in series;

the reset inputs of the first group of X co-ordinate counters and of the first group of $X_m$ co-ordinate counters are connected to the output of the horizontal synchronising pulses of the sync pulse selector;

the reset input of the second group of Y co-ordinate counters is connected to that output of the sync pulse selector from which the vertical synchronising pulses corresponding to the full frame of the output image of the video cameras must be taken;

the reset input of the second group of $Y_m$ co-ordinate counters is connected to that output of the sync pulse selector from which the vertical synchronising pulses corresponding to the half-frame of the output image of the video cameras must be taken;

the output of the first group of $X_m$ co-ordinate counters is connected:

- to the inputs of all the multiplexers and to the input of the RAM bank control decoder of the above-mentioned video standards converter with RAM, and
- through the first digital comparator and the first monostable multivibrator, connected in series, to the digital-to-analog converter of the same converter with RAM, and also
- to the count input of the second group of $Y_m$ co-ordinate counters;

the output of the second group of $Y_m$ co-ordinate counters is connected:

- to the inputs of all the multiplexers of the video standards converter with RAM, and
- through the second digital comparator and the second monostable multivibrator, connected in series, to the digital-to-analog converter of the same converter with RAM, and also
- to the count input of the counter of the number of pixels of the synthesized high-resolution image;

the input register is connected:

- through a parallel data input to the computer,
- through the first output to the reset input of the counter of the number of pixels of the synthesized high-resolution image and to the control input of the video standards converter with RAM,
- through the second output to the second input of the AND circuit;
- through the third output to the reset input of the D flip-flop;

the output register is connected:

- through the first input to the output of the vertical synchronising pulses of the sync pulse selector,
- through the second input to the output of the counter of the number of pixels of the synthesized high-resolution image,
- and through the output to the PC;

the address decoder for the programmable port of the PC for outputting control commands to the above-mentioned synchroniser is connected:

- through the input to the address bus of the PC, and
- through the output to the input of the input register;

the counter of the number of pixels of the synthesized high-resolution image is additionally connected to the control input of the buffer RAM decoder of the video standards converter with RAM.

**11.** A television system, according to claim 10,
distinguished by the fact that the synchroniser is additionally equipped with a second AND circuit and a D flip-flop, and:

said AND circuit is connected through one input to the output of the driving generator of synchronising signals corresponding to the resolution standard of the video cameras, through a second input to the inverted output of the D flip-flop, while the output may be used in a supplementary circuit for generation of input signals for the above-mentioned geometric distortion corrector, while
said D flip-flop is connected:

- through the data input to the control output of the multichannel threshold controller,
- through the synchronising input to the output of the selector of the sync pulses corresponding to the full frame of the input image,
- through the reset input to the third output of the input register.

**12.** A television system, according to claim 2,
distinguished by the fact that it is in addition equipped with a digital video signal amplitude corrector which is connected to the input of the multichannel geometric distortion corrector, with interframe digital video signal accumulators, whose number is usually equal to the number of video cameras and which are inserted between the ADC module and said digital video signal amplitude corrector, and with a multichannel threshold controller, which is connected to the outputs of the digital video signal amplitude corrector, is connected through the above-mentioned synchroniser to the control inputs of the interframe digital video signal accumulators, and is equipped with a feedback control output in a feedback loop with the source of primary (x-ray) radiation.

**13.** A television system, according to claim 12, distinguished by the fact that the digital video signal amplitude corrector is multichannel, and has in each channel:

two non-volatile RAMS, which are respectively intended for the storage of the codes of the correction factors of the "black" level and maximum excursion of the video signal for each pixel of the input image from the corresponding (to the given channel) video camera;
a differential stage for calculating the difference between the codes of the input signal and the "black" level for each pixel of the input image from the corresponding video camera;
a divider for calculating the normalised amplitude correction factors for the video input signals by dividing the constant setting the code for the maximum excursion of the video signal for the selected video cameras and ADCs by the varying code corresponding to the maximum excursion of the video signal for each active pixel of the image input from the corresponding video camera;
an address decoder for the programmable port of the PC for sending control commands to the given channel of the digital video signal amplitude corrector, in which the input is connected to the address bus of the PC;
an input register to receive control commands arriving from the PC, in which:

- the first input is connected to the PC data bus, the second to the output of the address decoder, while
- the outputs are connected to the control inputs of the non-volatile RAMS;

an output multiplier for generation of codes for the normalised video output signal by multiplication of the aforementioned normalised factors times the code of the difference signal,
and:
the first RAM is connected:

- through the data input to the output of the corresponding channel of the above-mentioned ADC module,
- through the control input to the first output of the input register,

the second RAM is connected:

- through the data input to the output of said differential stage,
- through the control input to the second output of the input register, while

both RAMs are connected through the address inputs to the X, Y output of the synchroniser;
the differential stage is connected:

- through the first input to the output of the corresponding channel of the above-mentioned ADC module,
- through the second input to the output of the first RAM,
- through the output to the first input of the said multiplier;

the divider is connected between the output of the second RAM and the second input of the multiplier.

**14.** A television system, according to claim 12, distinguished by the fact that the multichannel threshold controller has:

in each channel:

- a first comparator for comparing the codes of the pixels of the image formed by the video camera corresponding to the given channel, with the threshold code,
- an AND circuit which through the first input is connected to the output of the comparator and is designed for strobing the clock signal with the output signal of this comparator
- a counter, the count input of which is connected to the output of said AND circuit, and which serves to calculate the number of such pixels, in the image frame corresponding to the video camera connected to the given channel, whose code exceeds the pre-set threshold luminance value,
- a register, the data input of which is connected to the output of the counter and which serves to store the parallel output code of this counter,

a second comparator whose input is connected through said register to the output of said counter and which serves to compare the output code of this counter with the pre-set threshold number of pixels of the image that have a luminance no less than the afore-mentioned threshold value, and

- a trigger, in which the data input is combined with the output of said comparator and which serves for writing the logical output signal of this comparator at the end of the frame synchronization pulse from the above-mentioned synchroniser; and

the following, in common for all channels:
an address decoder for the programmable port of the PC for outputting to the multichannel threshold controller the codes of the luminance threshold values, of the number of pixels with a luminance no less than the threshold value, and of the number of channels with logic level "1" at the outputs, in which the input is connected to the address bus of the PC,

- an input register for receiving the codes of said threshold values arriving from the PC, in which the first (data) input is connected to the PC data bus, while the second (clock) input is connected to the output of the address decoder, the first output (of the code of the luminance threshold value) is connected to the combined first inputs of the first comparators of all channels, while the second output (the code of the number of pixels with a luminance no less than the pre-set value) is connected to the combined second inputs of the second comparators of all the channels,
- a multiplexer for multiplexing the output signals of all the channels, in which each of the data inputs is connected to the outputs of the triggers of the corresponding channels, while the control input is connected to the synchronising output of the synchroniser with the X co-ordinate code;
- an AND circuit for strobing the clock signal with the output signal of said multiplexer, in which the first input is connected to the output of the multiplexer, while the second input is connected to the combined second inputs of said AND circuits of each of the channels of the multichannel threshold controller and is connected to the clock output of the above-mentioned synchroniser;
- a counter for counting of the number of those channels whose signals at the outputs of the triggers have logic level "I", and which is connected through the count input to the output of said AND circuit, while it is connected through the reset input across the inverter to the frame synchronization pulse output of the synchroniser;
- a comparator for comparing the output code of the counter with the threshold value of the number of channels with logic level "1" at the outputs, connected through the first and second data inputs respectively to the output of the counter and to the third output of said input register, while it is connected through the output to the controller of the primary (x-ray) radiation source,
- a trigger for writing and storing the output signal of said comparator, connected through the data input to the output of said comparator, through the clock input across said inverter to the frame synchronization pulse output of the above-mentioned synchroniser, and connected through the control output to the inter-

34

frame accumulators across the above-mentioned synchroniser;

in which case:

in each of the channels, the following are combined and jointly connected to the frame synchronization pulse output of the synchroniser:

- the reset inputs of the counters of the number of pixels with a luminance no less than the pre-set value,
- the clock inputs of all registers and
- the clock inputs of all triggers, while

the second inputs of the first comparators of all channels are connected to the corresponding data outputs of the above-mentioned digital video signal amplitude corrector.

HIGH RESOLUTION TV SYSTEM

| 12 | 10 | 9 |
|---|---|---|
| Primary (X-ray) source | Calibrated test-objects | Convector image |

1-st TV camera 1

2-d TV camera 1

N-th TV camera 1

**11** Test-object location means in the TV camera field of vision

**7** Synchro nisator

**2** ADC block

**8** High resolution monitor

**4** Videosignal standart convertor with RAM

**3** Geometric distortion corrector

**6** PC

**5** Videosignals in PC entering block

Fig.1

Co-author-declarators:
S.I. Miroshnichenko
E.O. Zhilko
V.V. Kulakov
A.A. Nevgasimij

# HIGH RESOLUTION TV SYSTEM

Fig. 2

Co-author-declarators:
S.I. Miroshnichenko
E.O. Zhilko
V.V. Kulakov
A.A. Nevgasimij

HIGH RESOLUTION TV SYSTEM

Fig. 3

Co-author-declarators:
S.I. Miroshnichenko
E.O. Zhilko
V.V. Kulakov
A.A. Nevgasimij

Fig. 4

HIGH RESOLUTION TV SYSTEM

Fig.5

Co-author-declarators:
S.I. Miroshnichenko
E.O. Zhilko
V.V. Kulakov
A.A. Nevgasimij

## HIGH RESOLUTION TV SYSTEM

Fig. 6

Co-author-declarators:
S.I. Miroshnichenko
E.O. Zhilko
V.V. Kulakov
A.A. Nevgasimij

## HIGH RESOLUTION TV SYSTEM

Fig. 7

Co-author-declarators:
S.I. Miroshnichenko
E.O. Zhilko
V.V. Kulakov
A.A. Nevgasimij

Fig. 8

HIGH RESOLUTION TV SYSTEM

Fig.9

Co-author-declarators:
S.I. Miroshnichenko
E.O. Zhilko
V.V. Kulakov
A.A. Nevgasimij

HIGH RESOLUTION TV SYSTEM

Fig.10

Co-author-declarators:
S.I. Miroshnichenko
E.O. Zhilko
V.V. Kulakov
A.A. Nevgasimij

## INTERNATIONAL SEARCH REPORT

International application No.

PCT/UA 96/00016

| A. | CLASSIFICATION OF SUBJECT MATTER |
|---|---|

IPC⁶ : H04N 7/01

According to International Patent Classification (IPC) or to both national classification and IPC

| B. | FIELDS SEARCHED |
|---|---|

Minimum documentation searched (classification system followed by classification symbols)

IPC⁶ : H04N 5/32, 7/01, H05G 1/60, 1/64, 1/70, A61B 6/02

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US, A, 4644395 (TOKYO SHIBAURA DENKI KABUSHIKI KAISHA), 17 February 1987 (17.02.87) | 1-2,5,7 |
| A | SU, A, 189516 (NAUCHNO-ISSLEDOVATELSKY INSTITUT KLINICHESKOI I EXPERIMENTALNOI KHIRURGII), 4 January 1967 (04.01.67) | 1 |
| A | US, A, 4605962 (RCA CORPORATION), 12 August 1986 (12.08.86) | 1 |
| A | US, A, 4692937 (UNIVERSITY OF PITTSBURGH), 8 September 1987 (08.09.87), the abstract | 1 |
| A | US, A, 4761803 (SIEMENS AKTIENGESELLSCHAFT), 2 August 1988 (02.08.88) | 1, 9, 10 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April 1997 (21.04.97) | 22 May 1997 (22.05.97) |
| Name and mailing address of the ISA/ RU | Authorized officer |
| Facsimile No. | Telephone No. |

Form PCT/ISA/210 (second sheet) (July 1992)

## INTERNATIONAL SEARCH REPORT

| International application No. |
|---|
| PCT/UA 96/00016 |

**C (Continuation).    DOCUMENTS CONSIDERED TO BE RELEVANT**

| Category* | Citation of document, with indication, where appropriate, of the relevant passages | Relevant to claim No. |
|---|---|---|
| A | US, A, 4853947 (U.S. PHILIPS CORPORATION), 1 August 1989 (01.08.89) | 1,9,10,11,13 |
| A | SU, A1,1343562 (E.A. KONSTANTINOV), 7 October 1987 (07.10.87) | 1,5,6,9;10,12,14 |
| A | SU, A1, 1506591 (A. JU. DANILOV et al), 7 September 1989 (07.09.89) | 1,5,7,8,9.10 |
| A | EP, A2, 0136645 (SIEMENS AKTIENGESELLSCHAFT), 10 April 1985 (10.04.85) | 1 |
| A | EP, A1, 0372101 (SIEMENS AKTIENGESELLSCHAFT), 13 June 1990 (13.06.90) | 1 |
| A | EP, A1, 0051430 (TOKYO SHIBAURA DENKI KABUSHIKI KAISHA), 12 May  1982 (12.05.82) | 1-4 |
| A | FR, A1, 2485318 (SIEMENS AG), 27 April 1981 (27.04.81) | 1 |

Form PCT/ISA/210 (continuation of second sheet) (July 1992)